(19) Europäisches Patentamt
European Patent Office
Office européen des brevets

(11) EP 1 384 704 A1

(12) **EUROPEAN PATENT APPLICATION**

(43) Date of publication:
**28.01.2004 Bulletin 2004/05**

(51) Int Cl.7: **C04B 28/02**

(21) Application number: **02405638.4**

(22) Date of filing: **22.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicants:
- **Grilli, Domenico**
  **I-90148 Palermo (IT)**
- **Kirillov, Ghennady Michailovic**
  **426076 Izevsk (RU)**
- **Udovic, Boris Emmanuilovic**
  **117485 Moscow (RU)**

(72) Inventors:
- **Grilli, Domenico**
  **I-90148 Palermo (IT)**
- **Kirillov, Ghennady Michailovic**
  **426076 Izevsk (RU)**
- **Udovic, Boris Emmanuilovic**
  **117485 Moscow (RU)**

(74) Representative: **Gaggini, Carlo, Dipl.Ing.**
**Brevetti-Marchi**
**Via ai Campi 6**
**6982 Agno (CH)**

(54) **Expanding admixture, non-shrinking waterproofing Portland cement with expanding admixture and the process of its production**

(57)    (54) Expanding admixture, nonshrinking waterproofing portlandcement with the admixture and the process of its making

(57) the invention relates to the field of building materials, namely, cement admixtures, the cements with the admixtures described above and the process of their making; it can be used in cement and construction industry as well.

The embodiment of the invention thereof is: 1) an expansive admixture including three components, namely, sulphoaluminate klinker burnt in reducing medium, (% by mass) , consisted of $C_4A_3S$ 20 - 65, $C_{7-9}A_{2-3}S_2$ 15 - 30, $C_{1.8-2.3}S$ 0.5 - 55, CA 1 - 5, C S 3 - 10, additions ( the rest), organic components, aromatic and higher fatty acids , a relationship among the masses of the components is 1 : (0.025 - 0.3) : (0.02-0,2); 2).nonshrinking waterproofing portlandcement including: matrix ingredient ,namely, portlandcement klinker and gypsum stone as well as an expanding admixture ,a relation among the masses of the components is 100 : (2 - 4) : (1.5 - 4);
3) the process of making the portlandcement lies in the dead burning of the sulphoaluminate klinker in the admixture carried out at the temperature providing the quantity of the following additions (% by mass) $C_3S$ o.5 - 3, and $C_{12}A_7$ 0.3 - 2, joint or separate grinding with further mixing the (cited)hydraulic binding and the expanding admixture being carried out up to the uniformly distributed water repellant film formation of the expanding phase on the particles of the product in accordance with the criterion of the globular mass formation after mixing the finished product with water, the mass being homogenized by mixing and grinding as long as homogeneous cement/water suspension

The invention proposed offers saving in the use of the expanding agent at least 5 times as much compared with the minimum quantity of it in the known nonshrinking cement, its storage in silos and containers as well as the transportation of the nonshrinking cement according to the invention much as the transportation of portlancement

**Description**

This invention relates to building materials and products, namely, expanding admixtures added to portlandcement, non-shrinking portlandcements with the admixtures described hereafter and making processes of such cements as well, more particularly, the present invention relates to an expanding admixture, non-shrinking portlandcement with the admixture described hereafter and the process of making such cements

BACKGROUND OF THE INVENTION.

It has been known that after completion of setting when the marks are fixed and the distance between them is measured the cement-water system tents to exhibit shrinkage, namely, volumetric deformation of contraction of geometric dimensions lasting up to 5 years. More than half of it falls on the first day. In case if the marks are fixed later the first part of shrinking deformation is not observed at all. Considering some kinds of the hardened cement - water systems the characteristic features of the linear shrinkage, i.e. the shrinkage measured in one of the directions, usually the long side of the specimen of the hardening cement-water system. during 24 hours - 1 year are as follows: for cement stone ( hardened cement slurry of normal thickness is up to 3 mm/m; for mortar with cement, sand and water included , with the relationship among the masses of cement to sand to water 1: 1 : 0,35 up to 1,5 mm/m, respectively in the proportion of 1: 3 : 0,4 up to 0,8 mm/m

for concrete with cement ,sand, rubble, water included , the relationship of among the masses of the componnents 1 : 2:4 : 0,5 up to 0,15 mm/m, respectively. With the time passing the shrinkage usually comes to an end according to the logarithmic law. In 1905 the shrinkage and its coming to an end was accounted for by V. Mikhaelis В.М и хаэπ и с?. It results from the fact that the basic hydrates of portlandcement and /or its variants - gels - in the process of syneresis, i.e. separation of water, including its suction due to both capillary forces accompanied by evaporation (physical shrinkage) and chemical reactions of water binding by residuals of the initial cement products (chemical shrinkage). The terms of the shrinkages were introduced by T. ПАУэРС in 1947. In the water-cement systems with different water-cement ratios parts of each kind of shrinkage were estimated by Ch.П и кer in 1957 . He came to a conclusion that at W/C 0,3 - 0,6 they are of the same order of magnitude. The less W/C values the larger the part of the chemical shrinkage ( more than 60% of the total volume shrinkage magnitude). The higher the values the more the part of the physical shrinkage (over 60% of the total magnitude.) [1].

Shrinkage joints in concrete constructions and buildings introduced in France in 1871 to protect buildings from shrinkage strain cracking may create complications in work dealt with concrete.Thus, the cement free of shrinkage, for example, expansive or nonshrinking cement should be produced and used , at least, to simplify construction and building cincretion. It is eveident that such cements protect cracking from deformations caused by physical and chemical shrinkages of the cement stone both on outside surfaces of products and constructions, building mortar, front coats and inside concrete and reinforced concrete bodies providing thereby solidity of buildings, parts and constructions as well as preventing them from water and other environmental aggressive agents. They are sometimes referred to as cement products. Besides, protection against the contact of the agents with steel bars in АРМОL ĹЕМЕНТ and reinforced concrete is provided by nonshrinking and expansive cements that fill in channels (ways) and pores at the reinforcement and concrete boundaries. Taken together all these materials improve quality of building and architectural units made of cement stone, mortars, and АРМОL ĹЕМЕНТНЫIХ , concrete, reinforced concrete products ,construction and buildings as well.

Nonshrinking and expansive cements have already been known for about 180 years. Mention should be made of the fact that the cement proposed by Ye. Cheliev in Russia in 1821 according to its chemical composition was found to be of sulphoaluminate content, hence, an expansive one. The analysis was made according to the given sample which had been proposed by I.B. Znachko-Yavorsky (1955). It was A.Lossier who first proposed and published the facts about the cement which turned out to be expansive at hardening after mixing with water by introducing an expansive admixture into portlandcement, the data being based on measuring results of deformations of initial expanding of the hardening product and its further shrinking. The hardening cement/water system or cement stone , hardening building mortar made by mixing the expansive cement and sand with water, and the concrete made by mixing the described above cement, fine aggregate (sand) and coarse one (gravel and rubble) with water have been obtained and referred to as nonshrinking or expansive products. The initial expanding of them was approximately equal to further shrinking ( for nonshrinking products) or exceeded further shrinking ( for expansive products)

Sulphoaluminate klinker (SAK) made by the dead burning of the limestone, bauxide and gypsum mixture at 1250 - 1300 C has been taken as an expansive admixture in the content of expansive or nonshrinking cement. As was found out by T.A. Rogozina 20 years later the mineralogical composition of such klinker involved a new component, i. e.calcium alumunate. The molecular formula is 4 CaO 3 $Al_2 O_3$ S $O_3$ abbreviated as $C_4 A_3 S$ ( the abbreviated notation for the chemical compounds and minerals accepted in cement chemistry is used thereafter:

$Al_2O_3$ = A, CaO = C, $Fe_2O_3$ = F, $H_2O$ = H, $K_2O$ = K, Mg $Na_2O$ = N, $SiO_2$ = S, SO $O_3$ = S, for sulfide sulfur S = s).

Besides, it was determined by T.A. Rogozina that the klinker contained the following components: bicalcium silicate, ( belite, $C_2$ S ), maienite ($C_{12}A_7$ ) and anhydrate ( C S) as well. However, the indicated calcium sulphoaluminate had not been found by A. Lossier So it was quite difficult for him to control the mineralogical composition of such an admixture. Taking that into consideration, the composition of the admixture based on SAK in nonshrinking cement was presented by A. Lossier in the following way: in the work presented above the admixture content in cement for expansive products was equal to 20% and even more, for the nonshrinking ones it was-no less than 10%. Thereby( In connection with this) the expansive cement obtained by A. Lossier could not have been called as expansive portlandcement. So far the definition of French Standard of that time was concerned, no more than 5% of additions could have been included into portlandcement.

According to A. Lossier the mechanism of expanding of the cement with the admixture on the basis of SAK leads to crystallization of calcium aluminate, its content being higher in comparison with the common portlancement content in new hydrite forma of calcium hydrosrlphoaluminate. Now it is briefly termed as "trisuiphate". The phase was discovered by E. КАНД JIO (Ye. KANDLO?) in the composition of the new hydrate formations of the standard portlandcement (1892). Its detailed characterization is described thereinafter. An expanding effect of the phase is conditioned by the following process: a basic calcium-silicate gel-like crystal aggregation of the hardening cement-water system is overgrown by the fast-growing high-water trisulphate crystals . The strength of the aggregation provides all the basic technical properties of the cement. In modern scientific literature the aggregation is reffered to as a cement-water system matrix. A portlandcement klinker ingedient which is responsible for strength is referred to as a matrix ingredient.. To synthesize sulphate described from $C_4A_3$ S in the water after mixing the cement products additional quantities of calcium sulphate as well as calcium oxide are required. A source of the first one is anhydrate which is one of the SAK components , another one is a gypsum ingredient of the cement. Calcium oxide in anhydrite form results from hydrolysis of alite which is the basic mineral of portlandcement klinker by water after mixing. For the cement products to be expanded in the liquid phase the interaction of 4 reagents is threby required. They are calcium sulphoaluminate and anhydrite from the SAK admixture, alite from the klinker component and calcium sulphate from the gypseous one, both are from the matrix ingredient of the binding. Slow synthesis of trisulphate and, consequently, the expanding of the cement products and its dependence on W/C are associated with the presence of 4 reagents in the liquid phase of the C/W system under diffusion control. It leads to the uncertainty both in the process of expanding and the appropriate quantity of the expanding admixture in expanding or nonshrinking portlancements. According to A. Lossier the uncertainty largely depends on maienite ($C_{12}A_7$ ), a mineral which is involved into the admixture invented by him.

The reason therein is at hydration the mineral experiences the phase of products separation in accordance with alkalinity and forms ,on the one hand, a low alkaline (i.e. containing no calcium at all) alumina hydrogel, Al $(OH)_3$ and/or AlO(OH), abbreviated as A - H - (G), a dash means some uncertainty of the phase composition, G - gel, on the other hand, the highest alkaline of all known hydroaluminate phases, 1,ACCAPCOH_ФJI и HT-У э Д ДC phase (AFW) $C_6$ $AH_{36}$ (the composition of this phase based on the data of the 1990s has been described by 2,ПIO ДbMAH et al.). A deficiency of free water and lime in the liquid phase of the cement/water system prevents trisulphate formation and cement expansion. It occurs due to deep absorption the water by hydrogel A - H(G) and the water and lime in a hydrate form by the $C_4$ $AH_{13-19}$ phase. The AFW phase lasts about 20 minutes, then it breaks down to calcium hydroaluminates and $C_2$ $AH_{8-11}$ and calcium hydroxide CH as well.. While forming the hydroxides dry the system described. Besides, the hydrogel prevents a three reagent reaction enhancing diffusion essentially. So, with $C_{12}$ $A_7$, especially at its maximum, the efficiency of the admixture invented by Lossier as expanding agent decreased essentially. ( According to A. ДAФIOM who analized SAK proposed by A.Lossier in 1938, the content of the mineral was within 5 to 15 % by mass). With maienite the admixture by Lossier needs to be added to the expansive cement in amount of 20% and even more. The uncertainty of the expansive properties of the admixture by Lossier are thereof obviously seen. The properties of the admixture could not have been predicted beforehand, i.e. before the process of dead burning of sulphoaluminate klinker had been completed.. After burning one had to define how much admixture should be added to reach nonshrinkage and how much admixture should be used for cement expanding. But in any case nonshrinkage and cement expansion improve waterproofing properties of the cement products.

An expanding admixture which involves a natural mineral alinite [ $Kal_3(SO_4)_2(OH)_6$] to be added to nonshrinking or expansive products is well known, too. On addition the burnt admixture in amount of 10% (after dehydration at 650 - 800 C ) to the cement the portlandcement is becoming quick-hardening, but it does not become nonshrinking. ( F.L. Glekel, 1947). If only it is added in amount of 18-20% nonshrinking and expansive cements can be obtained ( K. S.Kutateladze, T.G. Gabadadze, 1955-1965) [5]. In the latest papers concerning alunite it has been shown that if the content of lime was rather high and high aluminate puzzolana had been introduced, it was quite possible for the cement to become expansive, unburnt alunite included. [6]. If the amount of burnt alunite is not enough one is uncertain about the composition of the burnt product, because the rate of the interaction of the burnt alunite and calcium aluminates hydration products from the matrix ingredient of the expansive or nonshrinking cement and hydraulic lime from alite contained in the cement and, at last, the gypseous stone of the cement depends essentially on the amounts of hydroxyls and potassium in the product of burning of alunite ore. The chief disadvantage of the admixture consisted of unburnt alunite is that the composition, rate and anions exit including $Al_2O_3$ into the liquid phase of the cement/water suspension are variable. But only half of $Al_2O_3$ exited into the liquid phases known to come into the expanding phase, e.i. trisulphate, the rest part exits into alumosilicate gels the expansion is not influenced by. In both cases it was impossible to stabilize the process of alunite expansive cements production in such a way that the composition stability and properties of the completed admixtire were not influenced by the changes of alunite quantity in the initial ore, the amounts of additions in alunite and granulometric composition of the product burning ( being the product of ore crushing or raw alunite grinding) , the instability of burning operation and solubility of the products of burning .

The most close to the invention admixture ( a prototype) is the one based on sulphoaluminate klinker which is used to produce nonshrinking or expansive products when introduced into portlandcement and/or its modifications. It includes a mineral component (sulphoaluminate klinker, SAK) as well as the organic ones ( aromatic and higher fatty acids) introduced into portlandcement in amounts of 5-10% of the klinker ingredient mass [7]. Physically and chemically, the process lies in the surface dissolution of calcium aluminate from SAK, the latter interacting with aromatic acid resulted in the formation of the complex compound of an aluminium ion and aromatic hydrocarbon radicals. In case of protection against humidity and carbonic acid it can be provided due to the higher fatty acid. However, the idea is not presented in the work. It appears to be empirical and does not make any sense because of maienite ($C_{12}A_7$) or its halogenite derivatives presence in SAK. Due to the superstoichiometric excess of the oxygen atoms (more than 0.3%) and, hence, high concentration of the cation vacancies A. ДҪ К и ВАРТНАМ, 1971) in the process of the fast side reactions the mentioned organic components of the expanding admixture are chemosorbed by the derivatives before their interaction with calcium aluminate. It has been proven by the tests that the admixture is reliable only if the klinker ingredient content is equal to 5 - 15% of the klinker ingredient mass. Nonshrinking and expansive properties of the product are provided by the maximum content of the admixture within those limits, no matter what the quality of the matrix ingredient of the binding.

The majn disadvantage of the product according to the prototype are high content of the admixture in the mixture with the binding, an increased cost of the completed expanding or nonshrinking cement and reduced quantity of the latter per unit of mass of the described admixture.

The aim of the invention is to eliminate the disadvantages mentioned above by reducing the content of the admixture in a completed product in comparison with the prototype. When an expanding phase in the hardening C/W system is broken free of the side reaction the aim is considered to be reached.

The problem set up can be solved in the following way: when being introduced into the hydraulic binding (i. e. portlandcement and/or its modifications )the admixture includes mineral and organic components (sulphoaluminate klinker; aromatic and higher fatty acids, respectively) , the klinker in its turn contains of low alkaline calcium aluminate, high alkaline calcium aluminate, monocalcium aluminate, bicalcium silicate and anhydrate as well with the following approximate quantity % by mass

| Low alkaline calcium sulphoaluminate | 20 - 65 |
| High alkaline calcium aluminate | 15 - 30 |
| Bicalcium silicate | 0.5 - 55 |
| Monocalcium aluminate | 1 - 5 |
| Anhydrate | 3 - 10 |
| Additions | the rest |

A relationship among the masses of the mineral and each of the organic components is approximately equal to 1 : (0.025 - 0.3) : ( 0.02 - 0.2), respectively.

In one of the variants of the invention a mineral with molecular formula $C_4A_3$ S, as a low alkaline calcium sulphoaluminate, a mineral with an approximate molecular formula $C_{7-9}$ $A_{2-3}$ $S_2$ as a high alkaline calcium aluminate, a mineral with an approximate molecular formula $C_{1,8-2,3}$ S, as bicalcium silicate, a mineral with an approximate molecular formula C A as a monocalcium aluminate and a mineral with the molecular formula C S as anhydrate are included into the expanding admixture.

In another variant of the invention an expanding admixture consists of an aromatic acid (benzoic acid) and a higher fatty acid ( either oleic or stearic, or the mixture of them) , a relationship among the masses of the components is within the following limits:

1 : 5 to 5 : 1,respectively.

In the next variant of the invention an expanding admixture contains the mentioned acids as their solutions and/or melts.

DETAILED DESCRIPTION

The embodiment of the present invention concerning an expanding admixture thereof is that SAK made by dead burning in the reducing medium contains no maienite ( $C_{12} A_7$ ) provided that the chemical composition of the basic mixture for SAK is prepared with the lime excess to form high alkaline calcium sulphoaluminatealuminate at burning, the burning should be completed at the period of high alkaline calcium sulphoalumanate formation to its full decomposition. Such a new type of SAK with high alkaline calcium sulphaluminate included but maienite and free calcium oxide practically excluded has first been obtained experimentally by the authors of the present invention. With the use of SAK the side reactions of the organic components and maienite and/or its derivatives cannot occur. The components are fully used to form the aluminium ion compounds and for their enviromental protection. It allows reducing fundamentally the required quantity of the expansive admixture when added to the hydraulic binding to make it non-shrinking or expansive in comparison with the known analogous admixtures.

Additional quantity of the Aft-phase ,i.e, a trisulphate form of calcium hydrosulphoaluminate abbreviated as trisulphate ( a pure, ferrious undoped mineral with a molecular formula $3 CaO Al_2 O_3 3Ca SO_4 32H_2O$ or according to the cement chemistry notation $C_6A SH_{32}$ called ettringite ; Ettringen is a small town in Germany, where the mineral was first discovered) is synthesized by the expanding admixture containing calcium sulphoaluminates in the presence of hydraulic lime evolved by alite ( $C_3 S$ ) of the portlandcement klinker from the binding being hydrolyzed into the liquid phase of the W/C system as well as in the presence of additional quantity ( in addition to that of containing in SAK) of sulfur trioxide in the liquid phase from the dissolving mixtures in portlandcement klinker and from lime stone of the binding as well. That calcium hydrosulphoaluminate is formed in the liquid phase of the water suspension of standard portlandcement resulted from the reaction of tricalcium aluminate ( $C_3 A$) from the klinker ingredient with the gypseous stone ($C SH_2$). In this case it contains different kinds of admixtures and is briefly referred to as "trisulphate" because its molecular formula includes three moleculas of calcium sulphate. As was shown by A. Emanuelson et al. [8] in 1997 on hydration of standard portlandcement trisulphate was first formed as a gel , then it was crystallized in columnar fiber (threads) of tubular (piped) structured form giving attachments. Such trisulphate typically decreases shrink deformations of W/C systems. But only trisulphate formed at SAK hydration immediately forms microcrystals growing up to 10-50 mkm which leads to expansion. Trisulphate results from the interaction of alumina cement, gypsum and lime in the liquid phase as was shown in the paper [9].

When a heterogeneous reaction of trisulphate formation is being completed because the ingredients are exhausted, it is possible for them to interact in the liquid phase.. Cement stone, building mortar or concrete due to the initial matrix, i.e. a primary skeleton based on the attachment of trisulphate crystals are characeraized by less shrinkage or expansion in comparison with the similar materials containing no admixture described above. The changes of deformation properties are irreversible.

In the variant of the invention it is taken into consideration that at burning the SAK compounds are not minerals of constant stoichiometry . Low alkaline sulphoaluminate and calcium sulphate are practically close in composition to the latter one. The rest compounds are characterized by inconstancy (variability) of stoichiometry. Though being quite experienced in burning process it is not a barrier in reaching the major aim of the invention ,i.e. non-maienite SAK.

The merit of non-stoichiometric composition of the SAK compounds is formation of trisulphate which contains more additions, mainly, silicate-ions ($SiO_4^{4-}$ etc.). It makes an attachment of the cement stone based on trisulphate firm as well as joning the expanding phase to the matrix of the binding easy. The matrix is mainly consists of calcium hydrosilicates.

In the other variant of the invention the fact of the essential modification of texture and the content of the expanding phase i.e. trisulphate in cement stone by aromatic and fatty acids is taken into consideration. Aromatic acid forms organomineral complex intermediate combinations, i.e. of short duration, based on an aluminuim ion extracted from the solid phase by aromatic acid. The acid hastens surface pickling in comparison with the surface water pickling the SAK sulphoaluminate compounds .

From this point of view aromatic acid can be referred to as a pickling component of the expanding admixture. As a result trisulphate forms highly dispersed polymolecular films around all the articles of the hydraulic binding. It brings about of what is termed a cellular mechanism of expansion which is provided by the growth of trisulphate crystals located around all the solid cement particles in the W/C suspension on the polymolecular film base. From topology it follows that with the given spatial location the trisulphate crystallization pressure is used at maximum to reach non-shrinkage and/or expantion of the cement products. Higher fatty acid is responsible for the environmental protection of the complex aluminium ion compounds (i.e, against water vapour, hydroscopic moisture, carbonic acid ) by the hydraulic film based on Shtern's double layer up to the moment when the water of mixing penetrates to the polymolecular films. In accordance with the known mechanism the hydrophobic films are thereafter removed from the surface of the particles [10]. They are exposed on the surfaces of the cement products, namely, cement stone, building mortar and/ or concrete increasing their waterproofness .

In the next variant of the invention the acids can be presented as mortars or melts rather than as initial ready-mixed states. Physically, it has been shown that in fact when reacting the acids are in modified states rather than initial ones, i.e, when being ground or mixed the binding and the expanding admixture together at the contact points of the particles of the homogenized substances an aromatic acid solution forms in hydroscope moisture which surrounds each particle of the binding and the expanding admixture by layers. The layers evaporate in the high temperature contact point areas at collision of the particles and grinding bodies in the process of grinding , the temperature is up to 550 C (Bouden and Teibour?, 1955) or at contact friction in the process of grinding or thorough mixing at the points of catching (hooking) the particles, the temperature is up to 200 C. At precisely those points the aromatic complexes of aluminium ions formed by chemisorbtion interaction with the ions of the outer atomic surface layer which contain aluminium of SAK compounds. At the very same points the points areas of melts of higher fatty acids responsible for environmental protection are formed.

According to the invention in the cement product ready for use which includes the expanding admixture the organic components of the admixture are thereby presented in the form of solutions and/or melts distributed in the form of films on the particles surface of the binding and expanding admixture.

Now in order that the invention may be clearly understood an embodiment thereof is, by way of example, hereafter more fully described wherein:

EXAMPLE 1.

To obtain the admixture according to the invention in the first set of the bench tests the following components should be used:

Initial materials:

Admixture components: accepted symbols: sulphoaluminate klinker (SAK), burnt in normal medium (SAK 1), burnt in reducing medium (SAK2), aromatic acid (AA) including benzoic one (AA1), sulphobenzoic or benzoic sulphoacid (AA2); higher fatty acid (HFA) including stearic one (HFAS) and oleic one (HFAO) as well. Data of the mineralogical composition of portlandcement klinkers according to the quantitative petrographic analysis, data the mineralogical SAK composition according to the insrumental methods of analysis: C A is obtained in accordance with the data of infrared spectroscopy (the presence of the absorption band of IR-spectra at frequency equal to 0.640 m corresponding to Al that is an aluminuim atom in the 6 coordination group), high alkaline calcium sulphoaluminate obtained according to the data of the roentgenographic analysis (Klien - Trocksell's set of reflexes?), low calcium aluminate, monocalcium aluminate, belite, anhydrate according to the data of the roentgenographic analysis (Tailor's set of reflexes? [13}), additions: alite (three calcium silicate) according to Malinin's sets of reflexes? [14] are presented in the invention proposed.

Molecular formulas of the variable composition minerals were defined according to the selective chemical analysis method modified by Panina's et al. [15].

The phase composition of sulphoaluminate klinkers (mass %) is as follows:

SAK 1 : $C_4A_3$ S 28, $C_9 A_2 S_2$ 2, $C_2S$ 38, CA 10, C S 13,

,additions: $C_{12} A_7$ 5, $C_3 S$ 2,

free calcium oxide 1, the rest are largely compounds of alkali metals converted to Na O - 1;

SAK 2A: $C_4A_3$ S 20, $C_9 A_2 S_2$ 30, $C_2S$ 33, CA 5, C S 10, additions: CA 0,3, CS 0,5, free calcium oxide 0,5, the rest are largely compounds of alkali metals converted to NaO - 0,7;

SAK 2B: $C_4A_3$ S 65, $C_9 A_2 S_2$ 15, $C_2S$ 12, CA 1, C S 3; additions: $C_{12} A_7$ 0,3, $C_3S$ 0,5, free calcium oxide 0,2, the rest are largely compounds of alkali metals converted to $Na_2O$ - 1,3;

SAK 2C: $C_4A_3$ S 40, $C_9 A_2 S_2$ 22, $C_2S$ 24, CA 2, C S 6, additions $C_{12} A_7$ 1, $C_3S$ 3,free calcium oxide 0,9, the rest are largely compounds of alkali metals converted to $Na_2O$ - 1,1;

AA 1 (aromatic acid): industrial benzoic acid ( molecular formula $C_6H_5COOH$), type A, white color powder;

AA 2: industrial sulphobenzoic acid (molecular formula $C_6H_5SO_3H$), white color powder;

HFAS (higher fatty stearic acid): industrial stearic acid (molecular formula $C_{18}H_{36}O_2$), type T - 3 , white color flakes

HFAO (higher fatty oleic acid): industrial oleic acid ( molecular formula $C_{18}H_{34}O_2$), weak peculiar odour liquid.

According to the invention the admixture is prepared by mixing the components in the cylinder-like lab mixer LM1 30 cm long and 5 cm in diameter. It is filled with small steel balls 1,0 - 1,2 cm in diameter. It is 15 % full in case of powdery components of the admixture and 30% full in case of powdery and liquid components of the admixture. The components are mixed during 20 minutes.

The ingredients of the cement-water systems, namely, cement-water suspension and fine-ground concrete mixture with the admixture added according to the invention are as follows:

Portlandcement PC1 : from the klinker of the following chemical minaralogical composition (mass %): chemical composition according to the basic oxides: $Si O_2$ 21,80; $Al_2O_3$ 5,29; $Fe_2O_3$ 5,09; Ca O 65,35; Mg O 0,84; $SO_3$ 0,38;

R $_2$O 0,58; including K $_2$O 0,47 and Na $_2$O 0,27: the sum is equal to 99,33, estimated performances: KH according to Kind are 0,90; n 2,10; p 1,04; the content of the rest small compounds is : Li $_2$O = 0, BaO 0,07; SrO o,oo2, NiO 0,031, CoO 0,02, Mn $_2$O $_3$ 0,095, Cr $_2$O$_3$ 0,188, MoO 0,054, TiO $_2$ 0,02, P $_2$O$_5$ o,19, Cl $_2$0, F$_2$O); estimated mineralogical composition is : C $_3$S 58, C $_2$S 19, C $_3$A 5,4, C $_4$AF 15,5, the rest are additions. The content of bihydrous gypsum is 2,15 % by mass;

Industrial water for concretes and mortars is prepared in accordance with the All-Union State Standard 23732-79. Besides, when testing the admixture the following initial materials are included into fine-grained concrete according to the invention:

FA(fine aggregate) contains quartz sand of 105 mm fraction, containing quartz 97, feldspar 2, dark-colored minerals (epidote and other additions) 1 , % by mass, respectively, hollowness is 38% by volume;

CA(coarse aggregate) contains granite rubble of 5-10mm fraction which in its turn consists of granite 95, quartzite 3, mica and other additions 2 % by mass, hollowness is 45% by volume.

All the initial materials meet the requirements and comply with the corresponding standards and specifications. In accordance with the invention the cement-water suspension and fine-grained concrete mixture with the admixture included are prepared by combining the ingredients in the lab mixer (the way of combining is described in Example 3). A cylinder-like forced mixer comprises a vertical fast rotor equipped by propeller blades and a reservoir for mixing and unloading the product ( in accordance with the All-Union State Standard 30744-01

The mixing time is controlled by the timing device. According to the invention and the prototype the length of the mixing period of all the ingredients after introducing the admixture and the binding in the closing stage averages 5 minutes.

According to the invention in the first sets of testing the admixture is pre-mixed with the cement and then added to the test cement material in the following the variants:

Cement slurry (cement/water suspension) with W/C equal to the mass ratio of water to cement in the cement slurry of normal thickness, in this instance, 0.23; $\beta$

Mortar mixture containing portlandcement, water and fine-grained mixture, a relation among the masses is of 1: 0.5 : 2; $\gamma$

Cement fine-grained concrete mixture containing portlandcement,water, fine and coarse aggregates , a relation among the masses is of 1: 0,5 : 1,4

Shrinkage and strength measurements are thereby carried out with the use of the hardening cement/water suspension specimen or the specimen containing fine-grained concrete and water mixture ( 0.23 : 0.5, respectively).

According to the invention in the second sets of testing the admixture is added to the cement by more thorough mixing, which is carried out in a batch-operated double-chamber grinder fettled cast iron armor plates. Each chamber is 0.28 m long, 0.5 m in diameter, with 48 min rotational speed, 1.1 kW drive power, 930 min rotational speed of the engine. In case of a weighted portlandcement the portion is about 10 kg each the grinding load for a chamber is as follows: cilpebs? 20 mm in diameter x L 32mm 5 kg, the mixing period is equal to 15 minutes. Further the mixture of portlandcement and admixture obtained are taken in the given proportion and tested combining with cement-water suspension and fine-grained concrete analogously to the ones mentioned above under the same names $\alpha$, $\beta$ end $\gamma$. The cement-water suspension, variant $\alpha$ ( cement slurry) is prepared by hand according to the All-Union State Standard 310. 3-76 Fine-grained concrete mixtures, variants $\beta$ end $\gamma$ are prepared according to the All-Union State Standard 30744-01, a propeller mixer described above being used.The completed materials standard specimens in the form of prisms (small beams), 4x4x16 sized, are made for hardening cement-water suspension, fine-grained concrete with the admixture according to the prototype ( the invention) or without the admixture are physically-mechanically tested. The specimens are tested for bending and compression strength in accordance with the All-Union State Standard 310.4-81.

To measure linear deformation at hardening, i.e. shrinkage and expansion strain the specimens 2x2x13 cm sized are made in the following way. For the specimen to be prepared the form (mould?) should be set up on the lab table covered with the steel sheet. Each form contains a rectangular metal tray with a steel frame on it. Each frame consists of three pockets where prisms are formed. In the middle of the sidewalls (2x2) of each pocket there are hemispherical recesses which are filled with modeling clay. Small steel balls (5-6 cm in diameter) are pressed into the last one thus attaching the balls to the walls of the pockets in the frame. Then the frame is several times shaken striking against the edge of the steel cover of the table to check if the balls are firmly attached. Then the frames are set on the steel trays. The places of contact between the frame and the tray are immured with the lubrication of the paraffin and colophony mixture (3:1) 4 gr to each frame. Then the forms are filled with the materials mentioned above and thickened the same way as when preparing the specimens for strength test according to the All-Union State Standard 310.4-81, i.e. on the vibrating table , vibration frequency is equal to 3000 min, after prior firm fixing the forms ( moulds) with the help of mechanical clamps.

In 48-+2 hours after mixing concrete ingredients with water the prisms with the small balls in the side walls are removed from the forms, marked and are immediately placed into the air-humid medium, the relative humidity (W) being no less than 95% and the temperature 20 3 C ( medium 1). Then the linear dimensions of the specimens are measured at certain time intervals and compared with the first measurement which was carried out right after forms removing. The linear deformation indicators of the specimens hardened under air-dry conditions (W is equal to 65 5%, the temperature is equal to $20 \pm 3$ C, medium 2) are similarly measured . Time of the last measurement equal to 2 months is known to be quite sufficient to obtain the values of linear deformation of the specimens from the hardening cement-water suspension ( cement stone) and fine-grained concrete provided that the previous result differs from the last one 10% at most.

To carry out the strength testing at compression a standard hydraulic press provided by the self-adjusting upper plate is used. To perform the tension testing at bending a testing machine for the beams to be loaded according to the three-point scheme is used (All-Union State Standard 11052-74). At shrinkage deformation testing an instrument is equipped with the clock indicator micrometer. The graduation on the scale is 0,01 mm apart. The longer pointer of the micrometer points to a fraction of mm. The shorter one points to mm. Every millimeter corresponds to the complete revolution of the longer pointer. The indicator is fitted with a pin with a hemispheric recess(hollow, pocket ?) to tight contact with the balls attached on the specimens. The pin is fixed on the guides so that the distance between the first indication of the indicator pointers and the lower end of the measuring cell, where the prism is located, remains constant. As the prism linear dimensions are changing the distance changes, too.

According to the invention the relations among the masses of the compositions of the admixtures used in the experiments ( example 1) and prepared by mixing the ingredients are as follows:

ADMIXTURE ( AD)1: SAKI + AA1 = 1:0.1: 0.1 (according to the prototype)
AD2: SAK2A+AA1 +HAS= 1:0.1: 0.1;
AD3: SAK 2B + AA1 +HFAS + HFAO = 1 : 0.1 : ( 0.05 + 0.05);
AD4 : SAK 2C + AA1 + HFAS + HFAO = 1 : 0.025 : (0.1 + 0.1);
AD5: SAK 2C + AA1 + HFAS = 1 : 0.3 : 0.2;
AD6: SAK 2C + AA1 +HFAS+HFAO=1. 0.3 : ( 0.01 + 0.01).

According to the invention the relations among the masses of the compositions of the admixtures prepared by grinding SAK with another components are as follows:

AD 7 corresponds to AD2, AD8 to AD3, AD9 to AD4, AD10 to AD5, and AD 11 corresponds to AD6.

The cement composition with the admixtures introduced is presented in Table 1, lines 1 - 14. The testing results of both series of the experiments are given in Table 1. The specimens being kept in medium 2 ,the specimens shrinkage was observed. The data are given in Table 1.

The compositions are given in lines 3-15, The optimal compositions are given in lines 7,8,13,14, the rest are in lines 3-6,and 9-12. The data are compared with the testing results when the cement was used without the admixture ( see Table 1, line 1 ) and the cement composition with the admixture according to the prototype is presented in Table 1, line2.

High effect is confirmed by the data, namely, the presence of expansion or essential shrinkage decrease of the products which include the admixture, its use is lowed up to 1,5-4% of the cement mass,i.e. by 1,7-4,7 times compared with the prototype. It results in the decisive decrease of the manufacturing cost of portlandcement with the admixture added according to the invention. It can be widely used in different fields of construction and industry. In medium 1 the cement-water compositions with the admixture according to the invention are expansive, expansion deformation (strain) of the cement stone being to 0,3 mm/m in 28 days. It corresponds to the expansive portlandcement which includes about 25% of the expansive admixture [5]. At present the level of manufacturing cost is twice as much expensive. Such expansion is impossible for the cement with the admixture according to the prototype. It should be pointed out that a regular dependence of the properties of the materials with the admixture on its composition is observed: the admixture according to the prototype including much (about 5% ) $C_{12}A_7$ is far less effective ; the best results have been shown by the admixtures containing higher amounts of calcium aluminate both high and low alkalines. The presence of oleic acid in the mixture of fatty acids allows using lower temperatures of charge mixing or admixture re-grinding according to the invention. The use of another aromatic acid, for example, sulphobenzoic instead of benzoic one allows us to obtain analogous results . The properties of the latter e.g. its strong smell, should be regarded for. So the content of the acid in the admixture should be decreased in the limits to a minimum. It should be noted that mud injected admixtures (All-union State Standard 24211-91 "Concrete admixtures. General Specifications", Table 1,item 19,) make the type on waterproofness rise of 2 classes. An expanding admixture makes the type rise to the same degree or even higher, it depends on the cement products composition.

The first aim of the invention was thereby to create an admixture for imparting non-shrinkage or expansion properties to hardening cement-water systems, hastening the process of hardening at the same time , which interacts at the lowed concentration in cements,i.e. in the limits of 1,5 - 4% of the cement mass. The aim has been achieved. According to the latest home review [17] it was considered theoretically unattainable.

The characteristics presented above allows using the admixture according to the invention as a highly effective one. But to increase the quality and durability of materials made with the admixture it is necessary to choose the optimal composition of non-shrinkable portlandcement and to use the developed method of preparation of the cement according to the invention. Analizing the level of techniques in the field of non-shrinkable and expansive waterproofing cements it should be noted that at present all the known compositions (they are about 60) of expansive and non-shrinkable cements are widely used in practice. And all of them are portlandcement modifications except of expensive gypsum alumina cement. It is a product of joint grinding of gypsum alumina klinker or slag and gypsum stone. The relation among the masses according to Budnikov and Kravchenko is 7 : 3, expansion in 28 days up to 0,35% [5]. The expansion of all the known cements is based on trisulphate formation at hydration, the trisulphate amount being higher than in portlancement. When a heterogeneous reaction of trisulphate formation is coming to an end because one of the ingredients contacting in a liquid phase of cement stone is exhausted expansion of the latter stops. Later on it is subjected to shrinkage. At any moment of hardening a fixing value of volume or linear expansion of a cement-water system is a difference of deformations of initial expansion and lasting shrinkage. In expansive cements the initial expansion is superior to the lasting shrinkage.. In non-shrinkage cements the initial expansion is about equal to shrinkage.

Shrinkage followed by expansion may be complicated by the phase transition of trisulphate to the less flooding phase which contains less sulfur as well. It can be referred to as calcium monosulphoaluminate $C_4A SH_{16}$, or mon-osulphate at deviations from the given formula because of additions.

The conversion of $C_6 A S_3 H 3_2$ to $C_4A SH_{16}$ occurs liberating 2 molecules of calcium sulphate C SH and 12 molecules of water H, having higher dissolving properties and acting upon the crystal attachment,i.e. a "skeleton" of the cement stone, dissolving the basic joining places. If in the liquid phase of the cement stone the concentration of anion S is equilibrum to trisulphate ,and the index of hydrogen ions concentration pH is higher than 11,5 the convertion accompanied by fast shrinkage does not occur. These parameters are quite available at expansive or non-shrinkage cements hardening , the compositions being rationally selected and the products level of waterproofness being higher compared with the products based on portlandcement. That is the reason why manufacturing production of expansive and non-shrinkage cements requires developing. The classification of expansive and non-shrinkage cements manufactured industrially is known to be used in the USA. It is based on formation of additional trisulphate from alumina ($Al_2O_3$ = A) in different mineral forms additionally added to portlandcenment or on the base of the trisulphate phase microstructure improved compared to standard (common?) portlandcement. 3 basic types of similar cements are picked out[9]:

- type K ( named after the author, Alexander Klein, USA, 1956, first published in 1958 [12]),prepared by joint or separate grinding followed by mixing of portlandcement klinker, gypsum $C SH_2$ and an expanding ingredient,i.e sulphoaluminate klinker (SAK), containing (mass%) calcium sulphoaluminate $C_4A_3 S5 - 60,30$-60 is more prefer-able, belite ($C_2S$) 20-50, anhydrite (C S)5 - 15, maienite ($C_{12}A_7$) 2-10 and free lime ( $C_{CB}$), the rest taken with the relation among the masses of the ingredientsin according to the stoichiometry equation of the trisulphate formation reaction at hydration of the expansive type K cement
- $C_4A_3 S + 8C SH_2 +6CH + 74H= 3C_6A S_3H_{32}$     (1)
- Free lime in a hydrate form (CH) may be presented in the SAK content and for liberate at alite hydrolysis during hydration of the portlandcement (matrix) ingredient of the expasive cement. An advantage of the expansive type K cement is higher sulphatostrength, at $C_3A$ content in portlandcement klinker ingredient being less than 6% and overall content of $SO_3 \geq 6\%$ of the cement mass [9]. The other expansive cements based on portlandcement being compared in sulphatostrength are close to portlandcement and insignificantly superior.

  o SAK is produced by dead burning of raw materials consisted of lime stone, bauxite and gypsum. In order to avoid slime thickening a dry method is used. In the process of heating anhydrite C S , lime $C_{CB}$ and y-Al O and unstable high-alkali calcium sulphoaluminate (Troxell's phase $C_9A_2 S_2$) occurred from their part
  o are first formed. At its decomposition in the process of further burning $C_4A_3 S$ with lime liberation to be used in the rest of alumina with $C_{12}A_7$ formation is observed to form. In SAK silica is bounded into $C_2S$. To accelerate mineral formation mineralizers such as fluorides are added. $C_{12}A_7$ is turned to be fluormaienite $C_{11}A_7 Cf$ or in a reducing medium sulphide derivative of maienite ($C_{11}A_7 Cs$).

It is possible to burn a belite portlandcement klinker from the raw material mixture with boxite and gypsum added. Simultaneosly with $C_4A_3 S$ alite ($C_3S$) based on the interaction with lime belite, liberating from decomposing high alkali calcium sulphoaluminate, Troxell's phase mentioned above, forms. Such a sulphoaluminate klinker (of nonequilibrium composition because $C_3S$ and $C_4A_3 S$ are thermodynamically incompatible)with gypsum of 6% permits obtaining highstrength expansive portlandcement, type 550- 600 with the expansion controlled [18].

Type M ( named after the main author, Victor Vasilievich Mikhailov, the idea was mentioned in the unpublished reports, 1935, the first publication appeared in 1941, the first inventor's certificate, USSR - in 1947[19]) is a product of joint or separate grinding and further mixing of the portlandcement ingredient, i.e. portlandcement klinker or portlandcement, alumina cement (in Russia presently it is referred to as an alumina slag in the paper mentioned[17] - made of the latter, calcium hydroaluminates) and a gypsum ingredient mixed in a boiling pot, the relation among the masses of the ingredients is: 70: (10-15): (15-20). The first mentioned composition with calcium hydroaluminate added, which is referred to as waterproofing expansive cement(WEC) was produced by Metrostroy in Moscow (1947-1976). It was used instead of lead for calking waterproof joints between the elements of cast iron or ferroconcrete lining (tubing) in underground tunnels. The other variant of the composition with alumina cement, asbestos and gypsum contained only in portlandcement is referred to as fast a hardening thickening composition (FTC) invented by Ya.N.Novikov et al.. USSR, 1975 . It is still being produced by Metrostroy in Moscow . The next variant with the higher content of alumina cement and gypsum is referred to as self-stressing cement which described herinafter. WEC sets within several minutes. It develops the initial strength at W/C 0.25-0.3 due to the presence of monosulphate. Trisulphate does not form and it was always underlined by V.V. Mikhailov. A monosulphate formation as the first hydrate phase relates to big crystallization of the initial $CAH_{10}$ and $C_3A H_6$ in the expanding agent which is used as a matrix ingredient by mean? (neutral)?- alite high alkali portlandcement including compounds of alkali metals Na and K converted to $Na_2O$, in amount of 0,8-1,1% of mass of the klinker component of the given portlandcement ingredient

In hardening cement slurry trisulphate forms from WEC, the volume of the solid phase being increased . It takes place only in case if the material of the joints caulked by WEC contacts with cold water coming from the surrounding ground.

When expanding it closes capillary pores. Simantaneously mono- and trisulphates are formed by FTC, but the mechanism of closing is analogous to the mechanism desribed. Expansive portlandcement (EPC, I.V. Kravchenko, Yu.F. Salomatina-Kuznetsova et al.,USSR,1954,[5]0 which is a product of joint grinding of ingredients (% by mass) of the alite portlandcement klinker included more than 7% of $C_3A$ 60-65, alumina slag 5-7, biwater gypsum 7-10 and the active mineral admixture 20-25. EPC of type 400 ( class 32,5), ending non-shrinkage or expansion 0.03 - 0.1% was produced by 3 cement plants during 3 years ( from 1965) . It is considered to be the cement hardening at curing of concrete (isothermal warming up within 3-4 hours compared with 8-12 hours of the standard portalandcement). But due to an expensive alumina ingredient, a complicated control of 4-component charge of grinding and the lack of properties constancy ( intolerably high dispersion of strength indicators) its production was terminated in 1968.

-Type S (named after H.E.Schwiete, West Germany, in 1954 together with Udo Lyudvig he opened a phenomena lies in the fact that portlandcement contained higher content of $C_3A$, more than 8%, and biwater gypsum more than 6% according to mass at relatively coarse grinding is practically non-shrinkable because of higher amount of trisulphate, its micro structure being improved [20].

More distinct crystallization and increase of the average length of trisulphate fibres make the average size of trisulphate crystals druses larger ,thereby ,the crystal pressure produced by the druses on the moving matrix elements of the hardening cement stone becomes higher. It leads to expansion growth.

Non-shrinkage and expansive cement of the S type is a product of joint grinding of the aluminate portlandcement klinker with higher gypsum content and an expansive agent based on different alumina materials i.e. higher aluminate active mineral admixtures e.g. ashes or slags with higher solvable alumina content (Schvite et al.,1956, see the review [21], alunite ore raw or burnt up to dehydroxylation etc. The cements (including the cement with the burn alunite admixture), mark 400, class 32.5 with the end expansion to 0,03 - 0,3% were periodically produced by 1-2 plants in Germany and the USSR. At the time of perestroika the cement production was terminated and was partly regained on the new sourse of raw materials,ie higher aluminate shales in North Ossetia [22]. Crystallizing components ("krents"), obtained from kaoline treated by sulphyric acid or "red gypsum" i.e. bivalence iron sulphate mixed with sulphuric acid which is a waste product of pigment titanium dioxide obtained from ilmenite ($CaTiO_3$) by the sulphuric acid method are used as an expansive agent for non-shrinkage cement of the S type. They contain alumina- and sulphate- anions and are suitable for the expansive S type cement production. The cement consists of ( in mass portions?):

portlandcement klinker 80-90, krent 10-20 and if it is necessary gypsum 5-10 [23], It is used for subway tunnels waterproofing in the Ukraine.

Besides trisulphate the other expansive agents such as fresh burnt calcium and magnesium oxides are widely known, but the expansive cements based on them are hot used in construction. E.g., a nonexplosive destroying material (NDM) has been created on the base of fresh burnt lime. It differs from construction lime. NDM is burnt at fast heating and the very high temperature (1250-1550) for the crystals of CaO in a completed NDM to be small (10-15 mcm) . NDM is used in the following way. A destructible construction should be drilled., dry NDM is put in the drilled blast-holes, then some is added, the low resulting relation between the masses of water to cement (W/C) is about o.15 - 0.2. In 24 hours the cement around is failed. The distance between the blast-holes is equal to 0.7 - 1 m ("Onoda-Cemento" company, Japan, - from 1985, I.G. Luginina, USSR, from 1989, see the review [17]).

There is no agreement regarding expansion cement mechanisms, in case if expanding agents are included. They can be classified as follows: expansion occurs under the effect of: 1) crystal pressure of the expanding agent; A.

Lossier was the first who pointed out that caurse regarding trisulphate; it was supported by NDM manufacturing and using in practice. Experimental estimation of the local crystal pressure is equal to 3 - 7 MPa (Khaimov-Malkov , USSR, 1966) shows the presence of the cumulative mechanism; if there is no pressure cumulation its magnitude is not enough for the cement to be expansive ; 2) Osmotic pressure enters the membranes from the products of hydration round the cement particles; under the membranes a layer of the inner liquid phase with high concentration of dissolution products is located; the membranes are surrounded by the outer liquid phase with the lower concentration of dissolution products; that is why the water ingresses into the membranes which results in cement stone expansion (the mechanism was first discovered analizing the experimental data proposed by S. Chattergy and J.W. Jeffry?, England, 1966; the mechanism was presented by A. Ye. Sheikin and T. Yu. Yakub, USSR, 1961); the experimental estimation of the pressure magnitude made by I.N. Akhverdov et al., USSR, 1961, which is equal to 4 - 5 MPa equires cummulation effect to be regarded at expansion; 3) monosulphate→trisulphate convertion in the "solid phase" ( V.V. Mikhailov, USSR, 1947, - the quoted inventor's certificate [19]; according to those mechanisms the W/C increase should result in the expansion magnitude decrease, such, indeed, is the case.

Taking that indicator into account it is very hard to choose the appropriate mechanism. A complex mechanism of expansion on the basis of the theory of double electrical layers swelling due to " the osmotic absorption of the water charged by the growing crystal surface" , in author's opinion, substituting for crystal pressure is discussed in the paper [17].

Because of a rich variety of the operating facts there is no general theory of the expansion cement mechanism. A geometric or, to be more exact, stereologic approach to that theory as the basic requirements for expansion was first used by T.V.Kuznetsova (USSR, 1986 [26]. It has been noted that 1) the overall structure for the whole volume of the mineral of the foundation i.e, a semirigid matrix of the hardening cement stone and 2) an expanding phase connected to that matrix, in the experimentally chosen quantity, both develop at once. As long as both of the requirements are not met, and there is no partly crystallized matrix, expansion is impossible because of being terminated by coagulative plastic deformation.

Once the matrix has been partly crystallized, the process of expansion starts and continues until the energy of expansion is larger than the energy of the mechanical reaction of the matrix to tension under the effect of the expanding agent. The matrix provides a cumulative effect. The expansion stress of the expansive cements of the types mentioned above are in the limits of 0.3 - 0.8 Moa ( expansive cements, type S, 1.5-2 MPa , type M and 2.5 - 3.5 MPa ( EC, type K, the strength of the cement stone ( matrix) to tension at binding stays at about the same level in 12 - 24 hours

It explains expansion at the level of 0.3 -0.8 % with the further shrinkage which occurs in 3 - 6 months up to resulting expansion 0.1 -0.4 %, respectively.

As to so-called self-stressing cement, it was supposed to be used to avoid cracking in the extended zone of ferroconcrete elements, e.g. floor slaps in buildings. To do this it is necessary to compensate the expansion stress because of the outer load. The required compensation is done by precompression ( prestress) of the cement stone under the effect of the self-stressing cement.

For the compensation to be completed the prestress at the level of ultimate concrete strength when the expansion equal to 1/7-1/10 i.e. 1,5 - 6 MPa ( for the basic classes of cements considering their strength ) is required. However, in fact, the level of the cracking formation is equal to about 0.65 - 0.7 of the breaking load. So the compensation should only be equal to 0.3 - 0.35 of the ultimate concrete strength testing for expansion. It allows calculating the required level of prestress, equal to 0.35(1.5 - 6 ) = (0.53-2.1) MPa . Such a level as well as the higher prestress has been produced on the basis of the expansive cement, type M developed by V.V.Mikhailov et al.[19]. They are referred to as self-stressing cements.( CC ). The cements consist of a joint grinding product (mass%) of the following ingredients: portlandcement klinker (or portlandcement) 65 - 67, alumina slag of the monoaluminate type ( or alumina cement ) 18 - 22 and gypsum ( of bi-water type) 13 - 15. The ultimate expansion of the composition in cement stone is equal to 2.5%. When being compared with waterproofing cements it might be assumed that to increase the expansion level and the self-stress energy by 1.5-2 it is necessary to increase the content of the expansive agent, i.e. alumina containing ingredient of the self-stressing cement, of 3- 5 % by mass due to the volume contraction of the portlandcement matrix. If the content of the alumina containing ingredient is becoming higher it increases the self-stress energy, but not so noticeably. In case if its content is equal to 30% of the cement mass and higher, the strength of the cement in general is decreasing. This dependence is accounted for by the stereological approach. Stereology is a fairly new branch of mathematics dealing with spatial distribution of figures and bodies and their properties as well. Stereology has been existing since 1957, after the first International Congress on stereology had taken place in Berlin. It is used in research of structures of materials.

Let us restate the conditions described above by T.V. Kuznetsova in a different way from the point of stereological view.

The first condition ( the formation of the structure base) is forming a multiconnected matrix. Its elements fill in the bulk of the cement stone so that any arbitrarily drawn line ( in general case it is a three-dimensional one) will differ from the zero probability to encounter (meet) any 2 and/or 3 matrix elements. Connectedness is considered to mean the possibility to draw, at least, one line through any neighbouring matrix elements chosen at random., the line with all its points being involved into the composition of matrix. Two and/or three matrix elements have been chosen because a one-dimensional matrix being bi-connected in each of its element, so called "a snake", is a free deformable one. Being three-connected in each of its element a three-dimensional core?? matrix i.e. a structure of diamond and its derivatives, is absolutely non- deformable, whereas a two-and- a half connected i.e. a mixture of the two-dimensional matrix ( with flexible two-connected one-dimensional elements) and a three-dimensional one (with multi-connected three-dimensional areas) characterizes the unknown intermediate limited deformable state (deflective volume/ surface). The second condition is to introduce the required quantity of the expansive agent by the beginning of the process of expansion It means that the required volume of the expansive agent should be so much as to produce an expansive effect upon the whole matrix volume simultaneously. Otherwise, irregularity of the volume variation will occur . It is well known that it causes cracking.

Let us consider the first condition of expansion. In accordance with A.Gerland's stereological theorem (USA, 1958 [25], see its variant in Russian according to V.S. Markin [26], or the presentation of Gerland's conclusion according to K.S. Chernyavsky [27]) in the two-phase random thickness matrix a continuously extended one-connected phase of random configuration travels through the whole matrix volume in one dimension ( through the matrix thickness,which is actually a break-down in the matrix by the filtering liquid in terms of the penetration theory The probability is different from zero provided that it occupies no less than 20% of the total matrix volume.

A consequence of the theorem is the fact that , first, for the one-connected phase to encounter independently with each out of two elements including the contiguous point ones........

Girland's theorem is true if no less than 0.2 + 0.2 = 0.4 of the matrix volume is filled by the phase. Thus, consequence 1 of Gerland's theorem is as follows: filling in the matrix volume ( no less than 40%) by the expansive phase is a condition of cumulation of the expansive strengths in the matrix. Analogously, consequence 2 of Gerland's theorem in case of the encounter with three contiguous matrix elements which are not lying in the same plane is as follows: filling in the volume of the system ( no less than 60%) by the matrix is a condition of the formation of the solid matrix structure which prevents expansion. The volume of the structure is considered to mean the sum of the initial cement and water volumes in the material based on cement. With W/C = 0.5 the sum of the specific cement and water volumes relating to the initial cement volume is equal to (0.5x3.15+1): !=2.58 ( where 3.15 is the ratio of cement density to water density; a decreasing of the sums of the specific volumes of the initial solid cement and water phases in comparison with the specific volume of hydrates which is referred to as contracting , on the average, about 10% by volume - is not taken into consideration). The volume of the initial cement is equal here to 1:2.58=0.39, i.e. about 40% of the cement stone volume. An expanding phase should fill in no less than 40% - 60% of the remaining volume, i.e. 24% of the volume of the cement stone. To do this, the hydrates volume is equal to 24 : 40 = 0.6 of the initial cement volume. The minimum mass cement hydration degree G min, according to this , considering an average hydrates density of 2.67 $g/cm^3$ and the average hydrates porosity of 30% is calculated in the following way:

$$(3.15; 2.67) \ 1.3 \ Gmin = 0.6; \ G \ min = 0.6: (3.15 : 2.67) : 1.3 = 0.39 = 40\%$$

The level of hydration degree of the portlandcement ingredient which is equal to 40% allows a flexible matrix construction without the high-water hydrates formation ( $C_6 A \ S_3 H_{32}$ and $C_4 \ A \ S \ H_{16}$). When it is considered that the high-water hydrates porosity is 1.5 times greater than the average porosity of the low-water hydrates which is about 30%, i.e. 45%, and the average trisulphate density is of 1,775 $g/cm^3$,then the apparent specific volumes of the high -and low- water hydrates are related as [(1 : 1.775) 1 .45} : [ (1 : 2.67) 1.3] = 1.667; hence, 20% of the expansive phase in the content of the new formations is equal to 20: 1.667 = 12% by mass. When it is considered that the relation among the masses [ $C_3 A$ + 3(C S)] / $C_3 S$ in portlandcement on the average is equal to [1+3x1]: 10,i.e. 0.4, the reaction degree $C_3 A$ + C S being about 0,7, the values of the hydration degree in 3 days of $C_3 A$ is 40% and $C_3 S$ is 30% ,disregarding conracting, we obtain that the content of the expansive phase (trisulphate and its analogs symbolized as Aft-phase) in the new formations of the standard portlandcement towards the end of the first three days of hardening is about: {[1x0,4 + 3 x 1} x 0,7} : [10 x 0,3] = 0,79 by volume. That is why O.P.Mchedlov-Petrosyan (the Ukraine, USSR, 1967) had every reason to believe that the initial strength of portlandcemnt (no more than 3 days) is defined by the trisulphate (ettringite) matrix. There is a free volume of pores to expand the matrix, which does not allow the expansion to occur. (A.Ye.Sheikin, 1967)

When the high-water hydrates are being considered, the minimum hydration degree of the cement for the flexible matrix creation is far less ,i.e. of 40% : [(0.79 x 1.45): (0.21 1.3)] = 9.5% where 1.45 and 1.3 are the coefficients of the porosity growth in terms of fractions of one, for the high- and low water hydrates, respectively. It is known that the hydration degree of the portlandcement ingredient of the EC part, approaching 10%, is reached a little bit later of the hardening end usually towards the end of the first 12 hours of hardening. That is the time for the mentioned stereologic conditions to be fulfilled. That is why the cement expansion starts in about 12 hours after being mixed with water. In case if the fine-grinding cement is used the additional amount of the expanding agent is required for the expansion to start, because higher hydration degree of the portlandcement (klinker) cement ingredient being fine- ground makes the average water content in the hydrate shells lower and thicker. It results to the decreasing of the coefficients values and, thus, it blocks the start of expansion as well as lows the end expansion value.

Based on the consequence of Geriand's theorem 2 the related calcutations show that to form a hard matrix no less than 60% of 60% of the remaining volume should be filled in by the hard structure,i.e. 36% of the total volume. Thus, the volume of the hydrates is required to come to 36: 40 = 0,9 of the volume of the initial cement. The required hydration degree (G) of the latter disregarding the quantity of the high-water hydrates which have already been formed is equal to G = 0.9 : (3.15 : 2.67) : 1.3 = 59%, i.e. about 60% of the greatest possible mass of the new hydrate formations. To form a flexible matrix the growth of G compared with the required shall be no less than 20% at the sacrifice of the outer low-water hydrates (i.e located outside of the initial cement particles), the quantity of which amounts to 9.5+20=29.5 , or about 30%. However, when calculating a hydration degree one has to take into consideration that the inner hydrates i.e. located in the limits of the former boundaries of the cement particles, are bound to form. They are not directly involved into the matrix formation . At W/C =0.5 the relation of the outer hydrate to the inner hydrate by mass is about I: 0.6. The required hydration degree shall be higher than that of the obtained by (1+0.6): I = 1.6,i.e. equal to 30 1,6- 48% or about 50% ( calculation accuracy is no more than 10%). In the hardening portlandcement with W/C equal to 0.5 such a hydration degree of the klinker part is reached , on the average, within 2 weeks. In EC portiandcement klincker hydrates quicker than in portlandcement due to adding hydrolytic lime in the high-water hydrates. The content of the latter is about twice as much higher than in portlandcement which resuits in decreasing the required hydration degree for the hard matrix to be formed from 50 to 40%. Taking all this into consideration it should be concluded that a hard matrix is formed in about 7-14 days of hardening. That is why its expansion has been stabilized by this time.

Let us consider the second condition of expansion according to T.V. Kuznetsova, namely, a self-stress condition. Considering the volume of the particles of the initial cement in the matrix the volume of the hard part amounts to : (1 = 0.9) : 2.58 +0.736 = about 74% of the total volume, which is appropriate to 26% of the capillary porosity.. If an expansive agent is considered to be Gerland's phase "breaking the structure through", the self-stress is appropriate to the condition of the expansive phase formation in amount of (0.2 + 0.2 + 0.2) 74 + 44.4 % by volume 45 by volume% of the hard part or 45 0.74 = 33% of the total volume. Consequence 3 ofGerland's theorem is thereby as follows: in the same approximation the minimum content of the expansive agent in the cement which is required for self-stress amounts to 33 : 1,667 = 19,7% = 20% by mass. This theoretical result is ,indeed, in agreement with the content of SC used in practice.

Two criteria of the cement self-stress are theoretically recognized ( two required and reasonable conditions): 1). part of the outer alkali hydrates in the total volume of the C/W system is no less than 30 % by volume (if the matrix is formed only by the portlandcement ingredient, the minimum required hydration degree of its klinker part amounts to 50 % by mass, in SC compositions is about 40%by mass); 2). The content of the expansive (the self-stressing agent is no less than 20 %by mass. A fact that a part of the expansive agent participates in the formation of the total matrix structure is taken into consideration. A stereologic approach allows analogical calculation of EC and SC content with the other expansive agents . Using this approach it is also possible to calculate the contents of the other expansive and self- stressing binding materials.

At present the self-stressing cements with the expansion energy (self-stress) of 10,20,40 kGf/cm are being industrially produced. In accordance with the content of the expansive agent evaluated by the relation of $Al_2O_3$ to $SO_3$ in the finished SC equal to 2,3- 2,4 for SC-10, 1,8-2,1 for SC-20, and 1,4-1,8 for SC-40, self-stressing cements are subdivided into the following types: SC-10, SC-20, and SC-40 (according to TS 21-20-43-80" Expansive Cement with self-stressing " is the first type, according TS 21-20-18-80 " Self-stressing Cement" is referred to as the other types).The first batches of SC -60 have been also produced . However, only the first two are really of great necessity because they are quite enough for non-cracking in the expanded area(zone)of the ferroconcrete constructions . Besides, the process of their production is rather complicated and they are quite unstable in storage. So practical use of self-stressing cements is usually limited to SC-10 and SC-20. At Sas-Tuybe cemment plant, under the direction of G.I. Chistyakov,( Kazakhstan) the colored self-stressing cement of the following content has been produced (mass%): white or whitened portlandcement klinker 65-75, SAK 10-15 and gypsum stone 3,7-5 (diverted to $SO_3$ ). The cement is in accordance with Technical Specifications of TS 21-20-40-80 and meets the colour requirements of All-Union State Standard 15825-80 "Colored Portlandcement. TS". Non-coloured cement is used in water-proofing concrete and ferroconcrete layers and elements, e.g. for underground construction (e.g.in Moscow, Minsk, St.Petersburg, Novosibirsk, ), for unrolled roof concreting of residential buildings e.g. in Moscow, Alma-Ata etc.) , in construction and hydroisolation of swimming pools (in Russia, Byelorussia, Kazakhstan, the Ukraine as well as in the USA including swimming pools and solaria of high-rise buildings with flat ceilings in Chicago and Detroit, for hydroisolation and waterproofness of sport rings of stadiums in many countries of Commonwealth of Independent Countries and in the USA as well. However, in the last 2 decades the total output of all types of SC all over the world is not large, of only 200 thousand tons , ¾ being produced in Russia. Considering limitedness of raw materials it is not, of course, enough to make large world known companies and experts dealing with architecture interested in this material.

All presented above allows us to come to a conclusion that the known content of the expansive agent in the composition of the expanding and non-shrinking cements which is used at present industrially and the content required from the theoretical point of view come to20 % by mass for self-stressing and 14-16 % by mass for non- shrinking cements. As far as the average cost for the expansive agents is nearly 4-5 as much as the average cost for portlandcements, the expansive cements are more expensive, i.e., on the average, [(4...5)x0.2+1x0.8]:1=1.6...1.8 times as much, As to the non-shrinking cements they are less expensive than the expansive ones ,i.e., on the average, [(4.....5)x(0.14..........0.16)+1x(0.86...........0.84)]:1=1.42......1.6 times as much. That is why they are of limited usefulness . The price excludes their application in general construction. Furthermore, the output of these cements per mass unit of the expansive agent is no more than 1:0.2=5 in units of mass for self-stressing cement and 1 : (0.14.......0.16)=7.1.......6.25 in units of mass for non-shrinking cement. In Russia alumina slag which is the basic material for the expansive agent is produced of bauxites in a blast furnace which were put into operation as early as in 1939 and thus far are worn down. In many European countries there are no bauxite deposits. And the initial material for the expanding agents production are have to be imported from abroad. The problem of a n expensive agent rate in expansive and non-shrinking cements is thereby of great importance. The more so as there is no opportunity to decrease the rate of the expansive agent. This is the chief disadvantage of the known expansive and non-shrinking cements.

The most close cement ( the prototype) to the proposed invention is non-shrinking portlandcement. It contains ground portlandcement klinker or portlandcement as a matrix ingredient which provides strength. It is also consists of a n expansive agent and an organic admixture [28]. It is characterized by containing alumina cement as an expansive agent and cellulose etheretes, namely, methyl cellulose or carboxymethyl cellulose as an organic admixture. The components relationship is as follows:

| | |
|---|---|
| Expansive agent | 13-19 |
| Organic ingredient | 0.01-1 |
| Matrix ingredient - portlandcement klinker or Portlandcement | the rest |

Being non-shrinking the cement is characterized by fast hardening, shortcut (accelerated) strength and shock binding effect. The chief disadvantage of the cement is a high rate of the expansive agent, though in minimum (13% by mass) it satisfies theoretical requirements calculated as shown above from the known level of techniques.

The aim of the present invention as to the composition of the expansive waterproofing portlandcement is to low the content of the expansive admixture in the above mentioned cement which allow providing expansion or, at least, non-shrinkage of the latter. This permits wide introduction of the cement in construction.

The aim is solved in the following way. Non-shrinking waterproofing cement is known to be a product of the joint or separate grinding with further mixing a matrix ingredient and an expansive admixture. A hydraulic binding ,namely, portlandcement and/or its variants and/or a product of the joint grinding and /or the further mixing of separately ground portlandcement klinker and gypseous stone, is included as a matrix ingredient which provides strength

The mixture containing a mineral component (sulphoaluminate klinker) and the organic ones (aromatic and higher fatty acids) is used as an expansive admixture. The klinker in its turn includes low-alkali calcium sulphoaliminate, bicalcium silicate, monocalcium aliminate and anhydrate. The content of the components is approximately as follows (% by mass):

| | |
|---|---|
| Low-alkaline calcium sulphoaluminate | 20-65 |
| Higher-alkaline calcium alumunate | 15-30 |
| Bicalcium silicate | 0,5-55 |
| Monocalcium aluminate | 1-5 |
| Anhydrate | 3-10 |
| Additions | the rest |

The relationship among the masses of all the components involved (the mineral and each of the organic ones) is the following: 1 (0.025-0.3): (0.02-0.2), respectively. An approximate mass relation between portlandcement klinker, gypseum stone converted to sulfur trioxide and the given expansive admixture is 100: (2-4) : (1.5-4).

The embodiment of the invention concerning the content of the mentioned cement is that the expansive admixture included contains organic components which in contrast to those according to the prototype serve the following functions. An aromatic acid performs the etching of the aluminate components in the admixture and portlandcement klinker resulted in accelerated liberation of their part into the adsorptive layer. A higher fatty acid protects the liberated aluminatoorganic complexes from the atmospheric agents, i.e. moisture and carbonic acid. As long as the aluminate components of the admixture and portlandcement klinker are characterized by non-stochiometric compositions and ,thus, nonequilibrium crystal lattice, the etching results to sharp acceleration of their interaction with water, the latter having been added into the completed cement. It also causes the nuclei sizes and the crystals of the expansive phase decrease and their distribution on the whole surface of the binding along thenabsorptive layer of the organics from the very beginning of the process of hardening. Stereologic Gerland's requirements are not met providing that the whole surface of the binding is covered by the thinnest layer of the expansive phase. In this case it is impossible for a line to penetrate the cement stone to avoid such a phase. The reverse is true as well: any point of the cement stone is beyond the capabilities to avoid participating in deformations caused by the expansive phase distributed by way described above.

With this new cellular stereologic scheme of the expansive phase location in the cement according to the invention the required quantity of the expansive admixture to make the cement nonshrinking which has been experimentally found out amounts to 1.5-4% of the mass of the binding. It is several times lower of that according to the prototype. It defines a radically new content of the cement as well as the mechanism of its expansion. The content provides the coverage of the whole cement matrix forming in the hardening cement stone by the expansive phase represented as a cellular system. Newly formed hydrates including the expansive high-water polyhydrate are growing inside (within)the contacting membranes from the hydrophobic cellular net. On joint or separate grinding with the further mixing of the components the net "is being thrown" on all the particles of the matrix cement ingredient. It keeps on expanding along with the growing gel of the high-water hydrates and its crystallization. The hydrates intergrowth (joining) and the formation of the binding matrix of the cement stone is taking place through the cells of the net. The joint action of these processes causes the initial expansion and further nonshrinkage of the cement according to the invention at the very low quantity of the expansive agent. It is very unexpected in comparison with all known techniques .

In case if the quantity of both calcium sulphoaluminates in the sulphoaluminate klinker is lower than 35 parts to 100 parts of the expansive admixture, the quantity of the expansive agent in the cement exceeds the required level. Thus, from the economic standpoint the efficiency is reduced due to the rise in price. In case if the quantity of both calcium sulphoaluminates is higher than 95 mass/parts to 100 mass/parts of the expansive admixture, difficulties emerge with the burning of the klinker. It affects its microstructure and makes its activity lower. These combined factor ^^ increase the required -quantity-of the admixture and decrease the efficiency of the invention from the technical-economical standpoint. The additional quantity of gypsum ( compared with that of in the matrix ingredient, i.e. in portlandcement) is introduced into the expansive agent in case if the quantities of gypsum $C\,SH_2$ in portlandcement and anhydrate $C\,S$ in sulphoaluminate klinker are not enough for trisuiphate to be formed according to stochiometry.........the reaction of calcium sulphoaluminate, gypsum and water after mixing the cement with water according to the invention. Instead of trisuiphate monosulphate occurs in the cement stone.

Now in order that the invention may be clearly understood an embodiment thereof is, by way of examples, hereafter fully described.

Example 2.

Conditions and materials for carrying out the invention are according to Example 1. The compositions of the cement in different variants of its mixing with the admixture are presented in Table 2.

The test results of the cements obtained demonstrate that: 1) the nonshrinking waterproofing cement according to the invention can actually be prepared with a very low quantity of the expansive agent (1.5 - 4%) what has been unknown either from the level of techniques or from the present level of the theory of cement expantion (e.g.,according to the review [17]). The cost of nonshrinking waterproofing portlandcement according to the invention is slightly higher than that of the tested portlandcemmment. A mass unit of the expansive admixture produces 25-67 mass units of the nonshrinking waterproofing portlandcement according to the invention. It allows the increase of the available output and use the cement according to the invention 5 times as much as the currently available cement at the known level of machinery (equipment) and technology; 2)the results presented in Example 1 have been confirmed ; they have indicated that mixing the admixture and other ingredients by finish grinding is of higher efficiency ( set of experiments 2) compared with the mixing ???(set of experiments 1)the strength and deformation characteristics of the cements ( lines 8-12, Table 2) are higher than of those with the similar content ( lines 3-7, Table2) ; 3) if the quantity of the admixture is being increased and the quantity of gypsum stone is being decreased simultaneously , the way of introduction is in accordance with the invention (lines 3-7 and 8-12, Table 2), the strength and deformation properties reach (go through) their extremum (extremes); the strength maxima (lines 5 and 10) are not coincident with the expansion maxima (lines 6 and 11); the latter ones correspond to higher values of the gypsum stone quantity...and the lower ones correspond to the admixture quantity in the cement compared to the strength maxima? This result can be accounted for by further investigation. 4) at simultaneous increasing of the admixture and gypsum stone quantity in the cement ( lines 10,13, and 14, Table2) the strength and deformation properties are characterized by extreme dependency i.e. they go through strength and expansion maxima, though the content of the cement is the same (line 13, Table 12). It is accounted for by the fact that in case of the presence of gypsum stone in cement in excess for 7 days free gypsum remains fixed according to L.A. Gudovich's method. The free gypsum loosens up the structure of the hydrosilicate matrix of the cement that decreases strength characteristics and serves for the cement stone shrinkage which makes the expansion lower despite the increasing quantity of the expansive admixture. Therefore, there is no point in further increasing of the admixture in the cement. If the quantity of the admixture is lower than 1.5% of the klinker ingredient mass the cement properties are very close to those of the cement prototype. It substantially affects the advantages of the invention. In general the advantages of the cement according to the invention compared to the one without the admixture (line 1, Table 2)and with the cement according to the prototype ( line 2, Table 2) are apparent .

It is worth noting that the temperature of the mixture equal to 60 C and higher in the process of grinding /mixing of the admixture components is easily attained . It is possible because being freshly burnt, taken out from the channel cooler the portlandcement klinker is now presented as the most common matrix ingredient characterized by the temperature about 60-100 C. In the process of grinding it is heated together with the other ingredients 30-60 C more. Thus, in the course of joint grinding or mixing the melting condition of the organic components the expansive admixtur is met with a minimum expenditure of energy.

We can draw the conclusion thereof that the presented results testify that the second aim of the invention to create (to develop) nonshrinking or expansive portlandcement close to portlandcement in composition and cost has been achieved.

The advantages of the methods (techniques) presented are best revealed in the process of cement making in accordance with the invention in the most effective way.

A method of preparing the nonshrinking waterproofing portlandcement involving portlandcement klinker as a matrix ingredient which is responsible for strength and an expansive admixture has been known. The cement is made by joint or finish grinding of the ingredients. The cement contains a mixture of calcium sulphate, calcium oxide and aliminate component (i.e. alumina cement or calcium hydroaluminate as an admixture. The realationship is as follows (% by mass ):

| | |
|---|---|
| Portlandcement klinker or portlandcement | 58-62 |
| Expansive admixture | 38-42 |

A joint grinding is being developed (brought) to such a degree of dispersion which is responsible for the absence of the final shrinkage of the cement obtained after hardening within 1 year.

The advantage of the method lies in that the cement obtained is quite homogeneous and its composition is easily controlled due to free calcium oxide presence in the mixture. Apart from being expensive due to the great quantuty of the expansive agent, hygroscopicity of the cement is the chief disadvantage. Because of the air moisture hydration even being kept in hermetic containers the latter (the cement) loses its properties during a week. It should not be kept in silos and dispatched in bulk. Though being kept in a hermetically sealed container the cement becomes clotted (clumpy) because of partial hydration of the matrix ingredient (gypsum) by humidity (moisture) and by hygroscopic moisture of the initial components. Hence, the cement should be produced just at the place of construction (use) . But , as a rule, it is inconvenient and of limited usefulness.

There is another technique (method) of making a similar kind of cement by additional introduction of the organic admixture components ( water repellant,i.e. acidol-naphta soap) at joint grinding.

[30].

However, according to the data suggested by M.I. Higerovich in the scientific-technical report ( Scientific-Research Institute of Cement , Moscow, 1957), the attempts to eliminate hygroscopicity by the acidol-napphta soap addition have not met with success.

The most close prototype of the cement preparation according to the invention proposed is the method of making the nonshrinking waterproofing portlandcement which involves a hydraulic binding as a matrix ingredient responsible for strength. A hydraulic binding presents portlandcement and/or its variants and/or a product of joint or separated grinding with further mixing of portlandcement klinker and gypsum stone. It also includes an expansive admixture containing the following components : mineral calcium aluminate $C_4A_3$ S or calcium monoaluminate C A or maienite $C_{12}A_7$ or the mixture of the minerals with a molar ratio C/A no less than 3, as well as calcium sulphate in the form of anhydrate C S or gypsum C $SH_2$, the relation between the masses of the ingredients (sulphoaluminate or calcium aluminate ) is about 1 : 2, the organic component that is any liquid water repellant and, besides, and including coke granulated slag as a damper ingredient responsible for expansion regulation [31], the relation among the components is as follows (% by mass):

| | |
|---|---|
| Expansive admixture: mineral component | 9 - 60 |

(continued)

| | |
|---|---|
| Expansive admixture : organic component | 0.1 - 1.5 |
| Coke granulated slag | 20 - 88 |
| Matrix ingredient - portlandcement klinker or Portlandcement | the rest |

The mixture of the components is jointly ground up to specific surface which saves the cement during its safety life. The advantage of the method is the reduced minimum of the expansive agent - only 9% by mass and enhanced protecting properties for the surface of the latter to be protected by water repellant due to adsorptive inertia of the slag component which exceeds in quality and in summarized(total) specific surface in relation to the water repellant. Slag inertia provides increase water repellant concentration on the surface of the expansive agent and, thus, saves the cement obtained in comparison with that of the described above. But a 2 month storage ,i.e. a standard storage life, for the cement obtained by the method according to the prototype is still impossible because of being clotted. The chief disadvantage of this method is hygroscopicity of the cement obtained though it is less pronounced in comparison with that of the products obtained by [29,30} methods. Besides, the presence of the coke granulated slag leads to the increased energy consumption spent on cement grinding .

The purpose of the present invention concerning the method of the cement preparation is to provide the uniform distribution of the part of the expansive admixture presented as solution (dissolved) in its own organic components on the surface of all the hard particles of the cement. It provides essential safety of the cement according to the invention, i.e. it guarantees at least the safety level of standard portlandcement

The set -up purpose can be solved in the following way: When preparing nonshrinking waterproofing portlandcement by joint or separate grinding with further mixing the matrix ingredient and the expansive admixture a hydraulic binding (as matrix ingredient) responsible for strength is involved.

A hydraulic binding is portlandcement and/or its variant and/or a product of joint grinding and/or further mixing of portlandcement klinker and gypsum stone grinded separately and/or (subsequent)further mixing of portlandcement klinker and gypsum stone being ground separately . An expansive admixture consists of the mixture which involves a mineral component sulphaluminate klinker), organic components ( aromatic and fatty acids). Sulphoaluminate klinker involves in its turn low alkaline calcium sulphoaluminate, high alkaline calcium aluminate, bicalcium silicate,monocalcium aluminate and anhydrate with the approximate content of the components (% by mass):

| | |
|---|---|
| low alkaline calcium sulphoaluminate | 20-65 |
| high alkaline calcium sulphaluminate | 15-30 |
| bicalcium silicate | 0.5-55 |
| monocalcium aluminate | 1-5 |
| anhydrate | 3-10 |
| additions | the rest |

an approximate mass relationship of the mineral and each of the organic components is 1 : (0.025 -0.3) (0.02 - 0.2) respectively. In nonshrinking waterproofing portlandcement the approximate mass ralationship of portlandcement klinker,and gyosum stone converted to sulfur trioxide and the admixture is 100 : (2- 4):( 1.5 - 4), dead burning being carried out in reducing medium under the temperature conditions providing the appropriate content of the additions (%by mass) of tricalcium cilicate ( $3 CaO SiO_2$) 0.5 - 3 and of maienite ( $12 CaO 7 Al_2 O_3$) and/or its halogenite (halogenation) and/ or sulfide derivatives 0.3-2. Joint or separate grinding of the hydraulic binding and the expansive admixture with further mixing is carried out up to the formation of the distributed water- repellant film of the expanding phase on the particles of the product according to the formation criterion after the finished product being mixed with globular mass water which is homogenized by mixing and grinding the latter up to homogeneous cemen-water suspension.

In the variant of the invention joint or separate grinding with further mixing of the hydraulic binding and the expansive admixture is carried out up to the uniformly distributed water repellant film of the expanding phase according to the globular mass criterion formed after the finished product being mixed with water, the quantity is equal to 40 -100% of the cement slurry volume.

The embodiment of the proposed invention concerning the method of preparation of nonshrinking waterproofing portlandcement at the stage of preparation sulphoaluminate klinker as a component of the expansive admixture is in the klinker phase content regulation by sintering temperature selection in the process of burning in reducing atmosphere (medium). This content of the sulphoaluminate klinker with the saturation coefficient results in the high alkaline calcium sulphaluminate formation , and it is the first to form. If there is free lime left by the time of completion of the required quantity of both calcium sulphoaluminates , the alite addition starts forming from belite , at a time high alkaline sulphoaluminate is being broken down with the formation of the maienite addition . The technologist's purpose is to bring the process of burning to a halt at that very moment when the content of both additions is within the pointed minimum limits. It corresponds to a minimum efficiency of the sulphoaluminate klinker in the admixture and, to the minimum rate of the admixture in nonshrinking water proofing portlandcement, respectively. Otherwise, the content of maienite increases up to the level of sulphoaluminate klinker in the admixture according to the mentioned above prototype, which ,in the long run, requires the higher quantity of the expansive admixture in the finished product (cement). Reducing atmosphere favours the additional anions to be included into the additions as they appear reducing their adverse effects on the expansive admixture efficiency. So, a sulphate - ion penetrates into maienite, in this case, as sulfide. A sulfide maienite derivative is less active than the initial material and leaves the expansive admixture efficiency almost unaffected.

It should be noted that in practice there is no time to determine an alite addition in the burnt product by the X-ray diffraction spectroscopy method or to determine a maienite addition by the infra-red spectroscopy method forming at a time. It means that the maienite occurance in sulphoaluminate klinker is a sufficient criterion to determine if the content of the additions is tolerable. Maienite appears in limited amounts . And it is characterized by the powder - like sulphoaluminate klinker formation in the water suspension of the microcompounds which are studied by the optical microscope right in the process of burning, on the head of the furnace (Kiln ) . They are presented as gel-like spherical formations around some klinker particles which include maienite additions (1-2 spheres in the field of vision of the optical microscope, 200x magnification, the klinker concentration in water suspension is approximately 1% of the mass of water in case of the upper concentration limit $C_{12}A_7$ in the clinker described or in case of the appearance of the first sector(segment) of such a sphere in the similar (analogous) compounds which corresponds to the mentioned above lower limit of the concentration of $C_{12}A_7$ in the klinker described). These spheres involve hydrogel Al $(OH)_3$ or AlO (OH) being outer (external) diffracting filmed, the film (cover, shell) consists of calcium hydroaluminates crystals . The spheres described have been first identified as a maienite indicator by O.M. Astreeva [32]. She was the first to use synthetic maienite in order to demonstrate that the described gel and the crystals are characteristic hydrate formations when interacting with water.

The embodiment of the invention proposed concerning the method of preparation of nonshrinking waterproofing portlandcement at the preparation stage is in the following: when melting the higher fatty acid in the process of grinding or mixing the matrix ingredient with the expansive admixture their dissolving power increases due to demycellization of the molecules. It is impossible at room temperature and the corresponding growth of covering power (filming, coverability)of the mass unit of the organic admixture compounds which presented as an absorption layer covering all the particles of the finished (completed) cement. The mineral component of the expansive admixture is incapsuled, i.e it enters into the composition of organic water repellant capsules. It extends the life storage of the cement obtained according to the invention to the level corresponding to the standard life storage of the standard portlandcement, i.e. up to 2 months. Second, the new water repellant effect is found to be caused by not only the organic but the mineral-organic absorption layer which surrounds each particle of the cement prepared according to the invention. The effect is in the globular mass formation immediately after mixing with water, i.e. it is not slurry but a mass consisted of cement-water globules turning into regular cement slurry by mixing with a trowel. This criterion allows the expansive admixture consumption as well as the grinding fineness of the cement to be calculated. It has been shown experimentally that at minimum allowable(tolerable) specific cement surface (about 250 $m^2$ /kg) the grinding fineness up to 400 $m^2$ / kg requires the increase of the admixture consumption for the whole surface of the absorption net to be filled in. Further consumption of the expansive admixture is not required in case if the specific cement surface is about 400 $m^2$ / kg, because the increase of the strength and matrix modulus of elasticity compensates for the expansive mixture consumption per the surface unit of the completely prepared cement.

The mentioned above globular water repellant effect shows the adequate correlation between the expansive admixture consumption and specific surface of the completely prepared cement that has not been known before. It can best be done in case of the minimum admixture consumption and the minimum specific cement surface . In practice the admixture consumption can be defined by a weighing batcher at the minimum level (1.5% of the cement mass), then the specific product surface is regulated in the limits of 250-400 $m^2$/kg until the water repellant effect described above is reached. In case of its absence in the given interval of the cement dispersion the expansive admixture volume is increased to 2 or 2.5% of the cement mass and the search is repeated on regulation of the specific surface. When preparing the cement according to the invention with the help of mixing the portlandcement matrix ingredient and the expansive admixture a globular water repellant effect is provided by the regulation of 2 factors, i.e.: the expansive admixture consumption and duration ( in the given mixer) or mixing efficiency ( in different mixers; the latter factor means the specific performing volume of each mixer). The longer the duration or mixing efficiency the lower the consumption of the expansive admixture at constant cement dispersion. The data obtained in such a way have been mentioned above and presented in Tables 1 and 2.

It should be noted that the globular water repellant level mentioned above is not available without sulphoaluminate klinker burning according to the criterion of the limited alite and maienite content, because maienite is unaffected by water repellant

Nonshrinkable waterproofing portlandcement ,prepared according to the invention is unclotting and may be stored in silos and dispatched in bulk or packed just as the standard one.

Taking into consideration the cost which is slightly higher than that of portlandcement and the possibility of being stored for a rather long time without the loss of technical properties the nonshrinking waterproofing portlandcement prepared according to the invention may be used as the standard cement in construction. It can be a help in introducing the portlandcement presented in the invention .

With reference to Example. 3 the essence (embodiment) of the invention concerning the process of making the non-shrinking watwerproofing portlandcement becomes much more obvious.

Example 3.

Conditions and materials for the invention to be realized are in accordance with Example 1. The preparation paramertres and the testing results of the prepared cements are presented in Table 3. A peculiarity of the testing is that the values of strength in cements and shrinkage deformations in concrete samples being in storage immediately after the preparation as well as the samples stored in 60, 90 and 180 days after being stored in the laboratory at a temperature of $20 \pm 3$ °C and relative humidity of 65 5%. The storage ability of the cements has been judged from the values of strength decrease and shrinkage deformation increase of the same age cements with different life storage.

The results obtained allow the following conclusions: 1). The cement under study containing no expansive admixture is characterized by the generally known growth of strength,shrinkage, strength losses and shrinkage increase at storage ( line 1, Table 3) , typical for portlandcement and from this point of view can be referred to as representative 2) the increase or decrease of the specific surface of the cement under study in comparison with the given optimum (330 $m^2/kg$) leads to the shrinkage increase or to the strength decrease in comparison with the characteristics described,

It is also resulted in decreasing the strength and shrinkage parameters which the storage depends upon. 3). Low shrinking cement according to the prototype ( line2, Table 3) is characterized by increased strength ,especially in early age (at the early stage), in comparison with the cement under study . It also characterized by higher growth of aging concerning the shrinkage parameter even compared with the cement under study. It usually relates to strength aging of the known expansive cements , the low shrinking cement prepared according to the prototype is aging no quicker than the cement under study. It ,no doubt, is one of the advantages. Nevertheless, the problem of increased aging compared with the portlancement (which is) generally characteristic for the known expansive and nonshrinking cements has been never discussed in patent and scientific - technical literature dealt with those cements. That is why the skepticism of one of the most prominent scientist in the field of chemistry and technology of cement ( the 20th century)P. Bogg expressed in his most famous work [33] is turned out to be justified. It has approximately been formulated like this: " It should be noted that the enthusiasm of the lawyers (attorneys) of different slag and special cements is not supported by many manufacturers and researchers interested in cements. It seems that some of the advantages and achievements of those cements have not been proven completely. As to the expansive cements the difficulties associated with the expansion control may impose hazards upon the mere idea for them to be used". In fact, due to the uncertainty all expansive cements practically used in the 2nd half of the 20th century , i.e. after the mentioned work has been already published, with an excess of an expansive agent are in contradiction with the stereologic theory ( over 20% by mass) for the aging does not influence upon the expansion parameter; 4) according to the invention the cements (lines 3-5, Table 3) containing expansive admixtures based on sulphoaluminate klinkers burnt in reducing atmosphere at optimal temperature in the area of burning of the furnace(kiln) ( given in column 4, Table 3)do not practically age concerning strength and linear deformation parameters despite very low content of the expansive admixture, ; except of the cement including admixture D2 based on sulphoaluminate klinker SAK 2A ( the content in E.g. 1) ages insignificantly concerning the shrinkage indicator; this is the second unexpected finding of the invention, the first is the attainment of nonshrinkage while the admixture content in the cement is only 1.5-4% by mass. The cement (line 4< Table 3) containing the admixture D3 despite the high specific surface (460 $m^2$ /kg) do not practically age within 6 month period of storage. It corresponds to the globular water repellant effect (hydrophbization) ... corresponding to.. 100% by volume of globules in the cement slurry. It should be noted that when employing D7 - D9 admixtures obtained by finish grinding rather than mixing of the components, the testing results are better of that analogous given in Table3. It is also referred to the waterproofness parametres in concrete samples. According to them we can come to a conclusion that the cements aging is similar to strength aging? But as to the cements prepared according to the invention the indicators of aging they are practically missing . It should be pointed out that there are no data published on expansive cements aging concerning waterproofness . It could be explained by much higher aging parameters of the known expansive cements concerning watreproofness compared with the decreasing strength data .

The data obtained show that the nonshrinking waterproofing portlandcement prepared according to the invention is liable to hydrophobizition containing the mineral component of the expansive admixture burnt in accordance with method suggested in the invention, the parameters of grinding should be kept according to those in the invention as well. The cement described can be stored for a long time safely what has been quite unexpected and unknown for non-shrinking especially for expansive cements concerning the very low quantity of the expansive admixture. The described peculiarities of the expansive admixture, nonshrinking waterproofing portlandcement, its use and the method of cement preparation according to the invention taking into consideration the lack of control difficulties in admixture, cement and cement products production provide (is favourable for)wide industrial use of the invention proposed.

Thus, the present invention is completely prepared to be industrially used .

## TABLE 1

DATA ON COMPRESSION AND SHRINKAGE STRENGTH OF CEMENT STONE ( α ) , BUILDING MORTAR ( β ) AND FINE – GRAINED CONCRETE ( γ ) ON THE BASIS OF TESTING RESULTS OF THE ADMIXTURE ACCORDING TO THE INVENTION

| № | Kinds of experiments | № of ad mixture | Cement content mass/p. | | | Temperature, C | Compression strength Mpa, in | | | | | | | | | Compression strength mm/m, in | | | | | |
|---|---|---|---|---|---|---|---|---|---|---|---|---|---|---|---|---|---|---|---|---|---|
| | | | | | | | 3 days | | | 28 days | | | 3 months. | | | 28 days | | | 3 months. | | |
| | | | PK | G | AD | | α | β | γ | α | β | γ | α | β | γ | α | β | γ | α | β | γ |
| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| 1 | 1 without admixture | - | 100 | 3,5 | — | 20 | 59,7 | 28,5 | 27,7 | 146,2 | 58,8 | 54,9 | 163,7 | 69,4 | 66,9 | 3,8 | 2,6 | 0,65 | 5,4 | 4,9 | 0,88 |
| 2 | prototype | AD1 | 100 | 3,5 | 7 | 60 | 62,5 | 29,2 | 27,9 | 153,0 | 60,3 | 55,8 | 164,2 | 69,7 | 66,0 | 0,2 | 0,15 | 0,04 | 0,3 | 0,22 | 0,05 |
| 3 | set1 according to the invention | AD2 | 100 | 3,5 | 4 | 72 | 66,4 | 36,5 | 35,0 | 173,7 | 70,5 | 66,1 | 185,0 | 84,9 | 82,3 | 0,18 | 0,13 | 0,03 | 0,22 | 0,16 | 0,04 |
| 4 | | AD3 | 100 | 3,5 | 1,5 | 79 | 67,0 | 37,9 | 33,2 | 174,7 | 69,0 | 67,3 | 186,6 | 85,5 | 84,2 | -0,10 | -0,05 | -0,03 | -0,08 | -0,03 | -0,02 |
| 5 | | AD4 | 100 | 3,5 | 2 | 32 | 66,5 | 38,0 | 35,1 | 179,8 | 70,4 | 68,6 | 198,4 | 98,3 | 95,0 | -0,15 | -0,08 | -0,05 | -0,13 | -0,08 | -0,05 |
| 6 | | AD5 | 100 | 3,5 | 2,5 | 100 | 68,9 | 40,2 | 38,1 | 185,0 | 74,3 | 71,9 | 199,3 | 100,1 | 97,5 | -0,22 | -0,11 | -0,07 | -0,18 | -0,12 | -0,08 |
| 7 | | AD6 | 100 | 3,5 | 4 | 45 | 78,1 | 43,8 | 41,0 | 194,4 | 77,2 | 73,9 | 200,5 | 103,6 | 99,4 | -0,31 | -0,13 | -0,10 | -0,21 | -0,14 | -0,11 |
| 8 | | | 100 | 3,5 | 2,5 | 45 | 74,0 | 41,5 | 40,0 | 190,6 | 75,7 | 71,1 | 196,3 | 101,3 | 97,0 | -0,26 | -0,10 | -0,07 | -0,17 | -0,11 | -0,07 |
| 9 | | | 100 | 3,5 | 1,5 | 45 | 71,9 | 40,2 | 39,4 | 185,3 | 73,8 | 69,5 | 192,9 | 100,0 | 95,6 | -0,21 | -0,07 | -0,03 | -0,14 | -0,08 | -0,03 |
| 10 | set2 according to the invention | AD7 | 100 | 3,5 | 4 | 72 | 63,0 | 33,9 | 37,2 | 181,4 | 74,8 | 69,8 | 190,3 | 88,2 | 85,7 | 0,11 | 0,06 | 0,00 | 0,08 | 0,02 | -0,02 |
| 11 | | AD8 | 100 | 3,5 | 1,5 | 79 | 71,1 | 42,4 | 38,7 | 183,5 | 76,6 | 72,2 | 193,3 | 90,7 | 87,0 | -0,12 | -0,08 | -0,05 | -0,12 | -0,07 | -0,04 |
| 12 | | AD9 | 100 | 3,5 | 2 | 32 | 68,4 | 40,1 | 36,3 | 182,6 | 75,1 | 70,0 | 191,6 | 99,7 | 97,9 | -0,18 | -0,11 | -0,03 | -0,14 | -0,10 | -0,07 |
| 13 | | AD10 | 100 | 3,5 | 2,5 | 100 | 70,8 | 44,3 | 40,2 | 189,3 | 78,9 | 74,3 | 202,6 | 105,7 | 99,3 | -0,27 | -0,14 | -0,10 | -0,23 | -0,15 | -0,12 |
| 14 | | AD11 | 100 | 3,5 | 1,5 | 45 | 77,0 | 45,8 | 42,6 | 192,0 | 80,3 | 77,5 | 196,0 | 104,8 | 98,1 | -0,25 | -0,13 | -0,07 | -0,17 | -0,11 | -0,07 |

## TABLE 2.

DATA ON COMPRESSION AND SHRINKAGE STRENGTH OF CEMENT STONE ( α ) , BUILDING MORTAR ( β ) AND FINE – GRAINED CONCRETE                           ( γ ) ON THE BASIS OF TESTING RESULTS OF THE ADMIXTURE ACCORDING TO THE INVENTION

| № | Kinds of experiments | № of admixture | Cement content mass/p. | | | Temperature, | Compression strength Mpa, in 5) | | | | | | | | | Compression strength mm/m, in | | | | | |
|---|---|---|---|---|---|---|---|---|---|---|---|---|---|---|---|---|---|---|---|---|---|
| | | | | | | | 3 days | | | 28 days | | | 3 months. | | | 28 days | | | 3 months. | | |
| | | | PK 1) | G 2) | AD 3) | C 4) | α | β | γ | α | β | γ | α | β | γ | α | β | γ | α | β | γ |
| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| 1 | 1 without admixture | _ 6) - | 100 | 3,5 | – | 20 | 59,7 | 28,5 | 27,7 | 146,2 | 58,8 | 54,9 | 163,7 | 69,4 | 66,9 | 3,8 | 2,6 | 0,65 | 5,4 | 4,9 | 0,88 |
| 2 | prototype | AD1 6) | 100 | 3,5 | 7 | 60 | 62,5 | 29,2 | 27,9 | 152,0 | 60,3 | 55,8 | 164,2 | 68,7 | 66,0 | 0,2 | 0,15 | 0,04 | 0,3 | 0,22 | 0,05 |
| 3 | set1 according to the invention | AD2 | 100 | 2 | 4 | 70 | 65,2 | 33,6 | 32,2 | 170,8 | 71,6 | 67,7 | 183,1 | 85,4 | 84,0 | 0,17 | 0,12 | 0,02 | 0,2 | 0,14 | 0,02 |
| 4 | | AD3 | 100 | 2,5 | 3,5 | 80 | 72,9 | 41,0 | 38,4 | 188,0 | 75,6 | 70,2 | 199,1 | 95,3 | 93,3 | -0,12 | -0,06 | -0,04 | -0,1 | -0,04 | -0,02 |
| 5 | | AD4 | 100 | 3 | 3 | 30 | 76,2 | 43,8 | 39,9 | 191,8 | 81,2 | 73,5 | 205,5 | 100,2 | 97,0 | -0,16 | -0,1 | -0,07 | -0,12 | -0,09 | -0,06 |
| 6 | | AD5 | 100 | 3,5 | 4,5 | 100 | 68,9 | 40,2 | 38,1 | 185,0 | 74,3 | 71,9 | 199,3 | 100,1 | 97,5 | -0,22 | -0,11 | -0,07 | -0,18 | -0,12 | -0,08 |
| 7 | | AD6 | 100 | 4 | 1,5 | 45 | 72,2 | 41,4 | 39,0 | 188,7 | 73,9 | 70,3 | 194,7 | 101,5 | 97,1 | -0,2 | -0,03 | -0,06 | -0,17 | -0,1 | -0,05 |
| 8 | | AD6 | 100 | 2 | 4 | 70 | 68,6 | 42,5 | 40,9 | 177,3 | 73,1 | 68,0 | 186,0 | 86,8 | 86,7 | 0,1 | 0,04 | 0,01 | 0,07 | 0,03 | 0,01 |
| 9 | | | 100 | 2,5 | 3,5 | 80 | 76,0 | 45,2 | 40,5 | 190,0 | 78,9 | 74,5 | 200,8 | 97,9 | 96,5 | -0,15 | -0,09 | -0,06 | -0,14 | -0,08 | -0,05 |
| 10 | set2 according to the invention | AD7 | 100 | 3 | 3 | 30 | 78,1 | 48,3 | 43,7 | 197,0 | 83,9 | 76,4 | 210,4 | 107,6 | 102,8 | -0,24 | -0,12 | -0,10 | -0,2 | -0,12 | -0,03 |
| 11 | | AD8 | 100 | 3,5 | 2,5 | 100 | 70,8 | 44,3 | 40,2 | 189,3 | 78,5 | 74,3 | 202,6 | 105,7 | 99,3 | -0,27 | -0,14 | -0,10 | -0,23 | -0,15 | -0,12 |
| 12 | | AD9 | 100 | 4 | 1,5 | 45 | 73,3 | 42,7 | 40,0 | 188,9 | 74,7 | 72,6 | 196,2 | 103,0 | 98,2 | -0,22 | -0,11 | -0,08 | -0,19 | -0,12 | -0,08 |
| 13 | | AD10 | 100 | 4 | 3,5 | 30 | 80,4 | 50,4 | 46,6 | 202,5 | 86,5 | 80,1 | 214,7 | 109,4 | 105,5 | -0,3 | -0,15 | -0,12 | -0,23 | -0,14 | -0,11 |
| 14 | | AD11 | 100 | 4,5 | 4 | 30 | 78,4 | 43,1 | 45,3 | 199,6 | 82,8 | 78,9 | 206,3 | 107,9 | 103,6 | -0,26 | -0,13 | -0,11 | -0,21 | -0,13 | -0,1 |

Notes: 1 –5 are according to the notes of Table 1; 6 – data correspond to those of in Table 1 for cements with no admixtures as well as for the cements under the given numbers of the expansive admixture.

EP 1 384 704 A1

TABLE 3

DATA ON COMPRESSION AND SHRINKAGE STRENGTH OF CONCRETE SAMPLES ON THE BASIS OF TESTING RESULTS OF THE PROCESS OF CEMENT MAKING

| № | Kinds of concrete | Kinds of admixtures | t, admix C% 1) | Cement content, mass.part 2) | | | S, sq.m/kg 3) | Globulars part.% by vol. 2) | Concrete content | | | | Compression strength, Mpa, age of samples: day/night and day/day after being prepared (0 days later/60 or more days later) | | | | | | Shrinkage, mm/m, age (days / days after being prepared ,1 day is starting fixation time) | | | | | |
|---|---|---|---|---|---|---|---|---|---|---|---|---|---|---|---|---|---|---|---|---|---|---|---|---|
| | | | | PK | G | AD | | | PC | W | FG | CG | 3/0 | 7/0 | 28/0 | 28/60 | 28/90 | 28/180 | 3/0 | 7/0 | 28/0 | 28/60 | 28/90 | 28/180 |
| | 2 | 3 | 4 | 5 | 6 | 7 | 8 | 9 | 10 | | | | 11 | 12 | 13 | 14 | 15 | 16 | 17 | 18 | 19 | 20 | 21 | 22 |
| 1 | without admixture | - | − | 100 | 3,5 | - | 330 5) | − | 1: | 0,5: | 0,6: | 1,4 | 21,7 | 40,4 | 54,9 | 51,9 | 45,0 | 41,6 | 0,02 | 0,03 | 0,04 | 0,13 | 0,16 | 0,22 |
| 2 | according to the prototype | AD1 | 1300 3) | 100 | 3,5 | * 7) | 280 7) | − | 1: | 0,5: | 0,6: | 1,4 | 39,6 | 48 | 51,0 | 54,4 | 51,1 | 45,6 | 0,01 | 0,02 | 0,03 | 0,2 | 0,35 | 0,4 |
| 3 | according to the invention | AD2 | 1320 | 100 | 2,5 | 3,5 | 380 | 40 | 1: | 0,5: | 0,6: | 1,4 | 38,8 | 48,1 | 65,5 | 66,2 | 61,3 | 65,8 | 0 | 0 | 0,01 | 0,02 | 0,06 | 0,08 |
| 4 | | AD3 | 1260 | 100 | 3 | 2,5 | 460 | 100 | 1: | 0,5: | 0,6: | 1,4 | 44,3 | 52,0 | 70,1 | 63,0 | 68,5 | 67,2 | -0,02 | -0,04 | -0,04 | -0,06 | -0,06 | -0,06 |
| 5 | | AD4 | 1280 | 100 | 3,5 | 2 | 430 | 70 | 1: | 0,5: | 0,6: | 1,4 | 43,2 | 48,1 | 73,2 | 74,0 | 75,1 | 72,3 | -0,04 | -0,07 | -0,12 | -0,06 | -0,11 | -0,07 |

Notes: 1 – optimal temperature for burning the sulphoaluminte klinkerof the given content in reducing medium (refer to Example 1); 2 – given cement compositions are optimal for shrinkage compression of concrete of given composition; for cement ingredients symbols refer to Notes, table 1.; 3 – optimum of specific surface of cement to reach globular hydrophobization; 4 – quantity? of globular hydrophobization ,i.e. an approximate part of globules in the cement slurry volume immediately after mixing the cement with water; 5 – specific surface of the controlled portlandcement (the cement under investigation), corresponding to minimum shrinkage of the concrete samples made of the portlandcement; on the decreasing or the increasing of the specific surface of the portlandcement described the shrinkage deformations of the samples increase; 6 – burning of sulphoaluminate klinker according to the prototype (in oxiding atmosphere); 7 – specific cement surface according

## Claims

1. An expanding admixture based on sulphoaluminate klinker for nonshrinking or expansive products introduced into a hydraulic binding, namely, portlandcement and / or its modifications, including : a mineral component (sulphoaluminate klinker) and the organic ones (aromatic and higher fatty acids) wherein said sulphoaluminate klinker contains low alkaline calcium aluminate, bicalcium silicate, monocalchim aluminate and anhydrate in the following approximate quantity of the components

| % by mass | |
|---|---|
| low alkaline calcium aluminate | 20 - 65 |
| high alkaline calcium aluminate | 15 - 30 |
| bicalcium silicate | 0.5 - 55 |
| monocalcium aluminate | 1 - 5 |
| anhydrate | 3 - 10 |
| additions | the rest |

with the approximate relation of the masses of said mineral component to each of the organic ones 1 : (0.025 - 0.3) : ( .02 - 0.2), respectively.(thereafter)

2. An expanding admixture according to claim 1 includes the mineral with the approximate molecular formula 4 CaO 3 Al $_2O_3$ SO$_3$ as low alkaline calcium sulpho aluminate, the mineral with the approximate molecular formula (7-9) CaO (2 - 3) Al $_2O_3$ 2SO$_3$ as high alkaline calcium aluminate, the mineral with the approximate molecular formula (1.8- 2.3) CaO SiO$_2$ as bicalcium silicate, the mineral with the approximate molecular formula CaO Al$_2O_3$ as monocalcium aluminate and the mineral with the approximate molecular formula Ca SO$_4$ as anhydrate.

3. The expanding admixture according to either claim 1 or 2. contains benzoic acid as saidaromatic acid, and stearic or oleic acids as said higher fatty acid , or the mixture of the latters with the approximate relation of the masses of the ingredients within the range of 1:5 to 5:1

4. The expanding admixture according to any of 1 - 3 claims contains said acids as solutions and/or melts .

5. Nonshrinking waterproofing portlandcement being a product of joint or separated grinding with further mixing the matrix ingredient and the expanding admixture,containing a hydraulic binding as a matrix ingredient responsible for strength, namely portlancement and / or its modifications and / or the product of joint grinding and/or further mixing of portlancement klinker and gypsum stone ground separately; including the mixture containing a mineral component (sulphoaluminate klinker) and an organic one(aromatic and higher fatty acids), as a mineral component it contains said sulphoaluminate klinker including low alkaline calcium aluminate, high alkaline calcium sulphoaluminate, bicalcium silicate, monocalcium aluminate and anhydrate with the following approximate quantities of said components (% by mass)

| low alkaline calcium aluminate | 20 - 65 |
|---|---|
| high alkaline calcium aluminate | 15 - 30 |
| bicalcium silicate | 0.5 - 55 |
| monocalcium aluminate | 1 - 5 |
| anhydrate | 3 - 10 |
| additions | the rest |

The approximate relation among the mineral and each of the organic components in the admixture (% by mass) is as follows:!: (0.025 - 0.3) : () 02 - 0.2) ,
in said nonshrinking waterproofing portlandcement the approximate mass relation of klinker, gypsum stone converted to sulfur trioxide and said expanding admixture is 100 : (2-4) : (1.5 - 4).

6. The method of making nonshrinking waterproofing portlandcement by joint or separated grinding with further mixing the matrix ingredient and the expanding admixture including a hydraulic binding as a matrix ingredient responsible for strength, i. e. portlandcement and/or its modifications and/or the product of joint grinding and/or further mixing of klinker and gypsum stone ground separately; and as an expanding admixture the mixture containing: a mineral component ( sulphoaluminate klinker,), and the organic ones ( aromatic and higher fatty acids), and... the sulphoaluminate klinker burnt in reducing medium and contained low alkaline calcium aluminate, high alkaline calcium sulphoaluminate, bicalciun silicate, monocalcium aluminate and anhydrate is used as a mineral component of the admixture, the approximate quantity relation of the components (% by mass) is :

| low alkaline calcium aluminate | 20-65 |
| high alkaline calcium sulphoaluminate | 15-30 |
| bicalcium silicate | 0.5-55 |
| monocalcium aluminate | 1-5 |
| anhydrate | 3-10 |
| additions | the rest |

with an approximate mass relation of said mineral and each of the organic components 1:( 0.025-0.3 ): (0.02 - 0.2) thereafter (respectively) and with the following approximate mass relation of klinker, gypsum stone converted to sulfur trioxide and said expanding admixture in nonshrinking waterproofing portlandcement 100 : (2 - 4): (1.5-4), the dead burning of the sulphoaluminate klinker being carried out largely in reducing medium at temperature providing an approximate quantity ( % by mass) of tricalcium silicate (3 CaO SiO$_2$) 0.5 - 3 and maienite ( 12 CaO 7 Al $_2$O$_3$) and /or its halide and/or sulfide derivatives 0.3 - 2, and joint or separate grinding with the further mixing of the hydraulic binding with the expanding ad mixture being continued up to the uniformly distributed water repellant film formation of the expanding phase on the particles of the product in accordance with the criterion of globular mass formation after mixing the product with water, which is homogenized by mixing and grinding as long as the homogeneous cement/water suspension is obtained.

7. The method according to claim 6 includes joint or separate grinding with further mixing the hydraulic binding and the expanding admixture being carried out up to the uniformly distributed water repellant film formation of the expanding phase on the particles of the product in accordance with the criterion of the globular mass content, formed after mixing the finished product with water in quantity of 40 - 100% of the cement slurry volume.

**European Patent Office**

**EUROPEAN SEARCH REPORT**

Application Number

EP 02 40 5638

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 2002, no. 05, 3 May 2002 (2002-05-03) & JP 2002 003251 A (DENKI KAGAKU KOGYO KK), 9 January 2002 (2002-01-09) * abstract * | 1,3,5,6 | C04B28/02 |
| A | DE 44 27 661 A (DENKI KAGAKU KOGYO KK) 9 February 1995 (1995-02-09) * claims * | 1,5 | |
| A | GB 2 175 295 A (BLUE CIRCLE IND PLC) 26 November 1986 (1986-11-26) * claims * | 1,5 | |
| A | GB 1 535 052 A (MATSUSHITA ELECTRIC WORKS LTD) 6 December 1978 (1978-12-06) * claims * | 1,3 | |
| A | PATENT ABSTRACTS OF JAPAN vol. 2000, no. 23, 10 February 2001 (2001-02-10) & JP 2001 151548 A (DENKI KAGAKU KOGYO KK), 5 June 2001 (2001-06-05) * abstract * | 1 | TECHNICAL FIELDS SEARCHED (Int.Cl.7) C04B |

The present search report has been drawn up for all claims

| Place of search | Date of completion of the search | Examiner |
|---|---|---|
| THE HAGUE | 30 January 2003 | Theodoridou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                EP 02 40 5638

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2003

| Patent document cited in search report | | Publication date | Patent family member(s) | | Publication date |
|---|---|---|---|---|---|
| JP 2002003251 | A | 09-01-2002 | NONE | | |
| DE 4427661 | A | 09-02-1995 | DE | 4427661 A1 | 09-02-1995 |
| | | | DE | 4447852 C2 | 07-06-2001 |
| | | | JP | 7232944 A | 05-09-1995 |
| | | | KR | 158245 B1 | 16-11-1998 |
| | | | KR | 150183 B1 | 15-10-1998 |
| GB 2175295 | A | 26-11-1986 | AT | 63532 T | 15-06-1991 |
| | | | AU | 572356 B2 | 05-05-1988 |
| | | | AU | 4920985 A | 08-05-1986 |
| | | | CA | 1248557 A1 | 10-01-1989 |
| | | | CN | 85108582 A ,B | 23-07-1986 |
| | | | DE | 3582862 D1 | 20-06-1991 |
| | | | EP | 0181739 A1 | 21-05-1986 |
| | | | IN | 167992 A1 | 19-01-1991 |
| | | | NZ | 214003 A | 12-02-1988 |
| | | | PL | 256011 A1 | 23-02-1987 |
| | | | US | 4798628 A | 17-01-1989 |
| GB 1535052 | A | 06-12-1978 | JP | 51070225 A | 17-06-1976 |
| | | | JP | 51127117 A | 05-11-1976 |
| | | | JP | 51057693 A | 20-05-1976 |
| | | | JP | 1157814 C | 25-07-1983 |
| | | | JP | 51059094 A | 22-05-1976 |
| | | | JP | 57050729 B | 28-10-1982 |
| | | | JP | 51067324 A | 10-06-1976 |
| | | | JP | 1147645 C | 26-05-1983 |
| | | | JP | 51068625 A | 14-06-1976 |
| | | | JP | 57037547 B | 10-08-1982 |
| | | | JP | 1160619 C | 10-08-1983 |
| | | | JP | 51068624 A | 14-06-1976 |
| | | | JP | 57055668 B | 25-11-1982 |
| | | | AT | 370399 B | 25-03-1983 |
| | | | AT | 872575 A | 15-08-1982 |
| | | | AU | 8667875 A | 31-03-1977 |
| | | | CA | 1094583 A1 | 27-01-1981 |
| | | | DE | 2551311 A1 | 26-05-1976 |
| | | | FR | 2291163 A1 | 11-06-1976 |
| | | | AU | 8667775 A | 07-04-1977 |
| | | | BR | 7507544 A | 10-08-1976 |
| | | | BR | 7507548 A | 14-06-1977 |
| | | | CA | 1070478 A1 | 29-01-1980 |
| | | | DE | 2551308 A1 | 26-05-1976 |
| | | | FR | 2291153 A1 | 11-06-1976 |
| | | | GB | 1535208 A | 13-12-1978 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 02 40 5638

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2003

| Patent document cited in search report | | Publication date | Patent family member(s) | | Publication date |
|---|---|---|---|---|---|
| GB 1535052 | A | | AT | 370386 B | 25-03-1983 |
| | | | AT | 872375 A | 15-08-1982 |
| | | | AU | 8667975 A | 02-06-1977 |
| | | | BR | 7507546 A | 10-08-1976 |
| | | | CA | 1058828 A1 | 24-07-1979 |
| | | | DE | 2551310 A1 | 20-05-1976 |
| | | | FR | 2291152 A1 | 11-06-1976 |
| | | | GB | 1535207 A | 13-12-1978 |
| | | | US | 4076545 A | 28-02-1978 |
| | | | AT | 370387 B | 25-03-1983 |
| | | | AT | 872475 A | 15-08-1982 |
| JP 2001151548 | A | 05-06-2001 | NONE | | |

EPO FORM P0459

For more details about this annex : see Official Journal of the European Patent Office, No. 12/82